# EUROPEAN PATENT APPLICATION

(11) **EP 4 686 593 A1**
(43) Date of publication of application: **04.02.2026**
(21) Application number: 25192517.8
(22) Date of filing: 29.07.2025
(51) Int. Cl.: B60K 6/365, B60K 6/387, B60K 6/445, B60K 6/52, B60K 6/26

(54) **DRIVE APPARATUS FOR VEHICLE**

(30) Priority: 01.08.2024 JP 2024126192; 28.10.2024 JP 2024189363
(71) Applicant: TOYOTA JIDOSHA KABUSHIKI KAISHA, Toyota-shi, Aichi-ken 471-8571 (JP)
(72) Inventor: KURIHARA, Daiki, Aichi-ken, 471-8571 (JP); YOSHINO, Hirotsugu, Aichi-ken, 471-8571 (JP); IMAMURA, Tatsuya, Aichi-ken, 471-8571 (JP); SUZUKI, Yosuke, Aichi-ken, 471-8571 (JP)
(74) Representative: D Young & Co LLP

(57) **Abstract**

A vehicle drive apparatus (10;110;210;310) includes (a) an engine (18); (b) a drive shaft (14f) for driving wheels (12f, 12r); and (c) a drive unit (16f;116f;216f;316f) including (i) a first electric motor (MG1); (ii) a second electric motor (MG2), (iii) a planetary gear device (24;124;224;324) which has first through third rotary elements (RE1, RE2, RE3) that are rotatable about a first axis (CS1), (iv) a power transmission mechanism (40; 340) and (v) a brake mechanism (BR;OWC) configured to allow or stop rotation of the first rotary element (RE1). The engine (18) and the first electric motor (MG1) are connected to the first rotary element (RE1). The second electric motor (MG2) is disposed on the first axis (CS1) and is connected to the second rotary element (RE2). The drive shaft (14f) is connected to the third rotary element (RE3). The first electric motor (MG1) is disposed on a second axis (CS2) that is other than the first axis (CS1), and is connected to the first rotary element (RE1) through the power transmission mechanism (40; 340). The brake mechanism (BR;OWC) is provided on a rotary shaft (40d;40e;340d) which is rotatable about a rotary axis (CS5) other than the first axis (CS1) and which constitutes a part of the power transmission mechanism (40;340).

## Description

### FIELD OF THE INVENTION

The present invention relates to a drive apparatus for a vehicle, wherein the drive apparatus is provided with an engine and a drive unit that includes two electric motors and a drive unit including a planetary gear device.

### BACKGROUND OF THE INVENTION

There is well known a drive apparatus for a vehicle, wherein the drive apparatus is provided with (a) an engine, (b) a first drive shaft for driving one of front and rear wheels of the vehicle, and (c) a first drive unit that includes (c-i) a first electric motor, (c-ii) a second electric motor and (c-iii) a planetary gear device having a first rotary element, a second rotary element and a third rotary element. JP 2014-80135 A discloses a drive apparatus for a hybrid electric vehicle as an example such a drive apparatus. In the drive apparatus disclosed in this Japanese Patent Application Publication, an axial dimension of the first drive unit is reduced by arranging input and output shafts of the first electric motor substantially parallel with input and output shafts of the engine.

### SUMMARY OF THE INVENTION

In order to establish various drive modes, it might be possible to construct the drive apparatus such that the engine and the first electric motor are connected to the first rotary element of the planetary gear device, such that the second electric motor is connected to the second rotary element of the planetary gear device, and such that the first drive shaft is connected to the third rotary element of the planetary gear device. As the various drive modes, there are HEV (Hybrid Electric Vehicle) mode and BEV (Battery Electric Vehicle) mode, for example. In the HEV mode, the engine is operated and an electric power is transferred between the first electric motor and the second electric motor. In the BEV mode, the engine is stopped and a torque is generated in the first electric motor and the second electric motor. It might be possible that the first drive unit further includes a brake mechanism that is configured to stop rotation of the first rotary element when a motor driving, i.e., BEV driving, is performed by the second electric motor as a power source without causing the first electric motor to generate the torque in the BEV mode. In the vehicle drive apparatus constructed in this way, too, it is desirable to reduce the axial dimension of the first drive unit, which is, for example, a length of the first drive unit in a direction of a first axis that is a center of rotation of the planetary gear device.

The present invention was made in view of the background art described above. It is therefore an object of the present invention to provide a drive apparatus for a vehicle, wherein the drive apparatus is capable of establishing BEV mode for driving the vehicle by a second electric motor and includes a first drive unit that is made compact in an axial dimension.

The object indicated above is achieved according to the following aspects of the present invention.

According to a first aspect of the invention, there is provided a drive apparatus for a vehicle. The drive apparatus includes: (a) an engine; (b) a first drive shaft for driving one of front and rear wheels of the vehicle; and (c) a first drive unit including (i) a first electric motor, (ii) a second electric motor, (iii) a planetary gear device having a first rotary element, a second rotary element and a third rotary element that are rotatable about a first axis, (iv) a power transmission mechanism and (v) a brake mechanism configured to stop rotation of the first rotary element by being placed in an engaged state. The engine and the first electric motor are connected to the first rotary element. The second electric motor is disposed on the first axis and is connected to the second rotary element. The first drive shaft is connected to the third rotary element. The first electric motor is disposed on a second axis that is other than the first axis, and is connected to the first rotary element through the power transmission mechanism. The brake mechanism is provided on a rotary shaft which is rotatable about a rotary axis other than the first axis and which constitutes a part of the power transmission mechanism.

According to a second aspect of the invention, in the drive apparatus according to the first aspect of the invention, the power transmission mechanism is constructed such that the rotary shaft, on which the brake mechanism is disposed, is to be rotated at a higher speed than the first rotary element.

According to a third aspect of the invention, in the drive apparatus according to the first aspect of the invention, the power transmission mechanism includes (iv-1) a motor drive gear which is disposed on the second axis and which is connected to the first electric motor, (iv-2) a motor driven gear which is disposed on the first axis and which is connected to the first rotary element and (iv-3) an idler gear which is disposed on the rotary axis other than the first and second axes and which meshes with the motor drive gear and the motor driven gear, wherein one of the motor drive gear and the idler gear is mounted on the rotary shaft, unrotatably relative to the rotary shaft.

According to a fourth aspect of the invention, in the drive apparatus according to the third aspect of the invention, the above-described one of the motor drive gear and the idler gear, which is mounted on the rotary shaft, has a fewer number of teeth than the other of the motor drive gear and the idler gear.

According to a fifth aspect of the invention, in the drive apparatus according to the third aspect of the invention, the motor driven gear is a helical gear having helix angle that is set such that a direction of a thrust load generated in the motor driven gear owing to a torque, which is generated by the second electric motor to cause the vehicle to run in a forward direction with the rotation of the first rotary element being stopped by the brake mechanism, is opposite to a direction toward the first rotary element.

According to a sixth aspect of the invention, in the drive apparatus according to the first aspect of the invention, the power transmission mechanism includes (iv-1) a motor drive gear which is disposed on the second axis and which is connected to the first electric motor and (iv-2) a motor driven gear which is disposed on the first axis and which is connected to the first rotary element, such that the motor drive gear and the motor driven gear mesh with each other, or are connected to each other through a connecting member, wherein the motor drive gear is mounted on the rotary shaft, unrotatably relative to the rotary shaft.

According to a seventh aspect of the invention, in the drive apparatus according to the sixth aspect of the invention, the motor driven gear is a helical gear having helix angle that is set such that a direction of a thrust load generated in the motor driven gear owing to a torque, which is generated by the second electric motor to cause the vehicle to run in a forward direction with the rotation of the first rotary element being stopped by the brake mechanism, is opposite to a direction toward the first rotary element.

According to an eighth aspect of the invention, in the drive apparatus according to the first aspect of the invention, the first drive unit further includes a torque limiter configured to limit a torque transmitted between the first drive shaft and the brake mechanism.

According to a ninth aspect of the invention, in the drive apparatus according to the first aspect of the invention, the brake mechanism is constituted by an engagement mechanism configured to limit a torque transmitted between the first drive shaft and the brake mechanism.

According to a tenth aspect of the invention, in the drive apparatus according to the first aspect of the invention, the first drive unit further includes a parking gear which is to be rotated together with the third rotary element and which is configured to inhibit the rotation of the first drive shaft by being mechanically and unrotatably fixed, wherein the parking gear is located in a position that overlaps with the third rotary element in a radial direction.

According to an eleventh aspect of the invention, in the drive apparatus according to any one of the first through tenth aspects of the invention, there are further provided a second drive shaft for driving the other of the front and rear wheels, and a second drive unit including a third electric motor connected to the second drive shaft.

In the drive apparatus according to the first aspect of the invention, the planetary gear device of the first drive unit is constructed such that the engine and the first electric motor are connected to the first rotary element, the second electric motor is connected to the second rotary element, and the first drive shaft is connected to the third rotary element. The first drive unit further includes the brake mechanism configured to stop rotation of the first rotary element. Thus, the drive apparatus is capable of establishing, as a drive mode of the vehicle, various modes including a mode for driving the vehicle by the second electric motor as a power source with the engine being stopped. Further, the second electric motor is disposed on the first axis, while the first electric motor is disposed on the second axis that is other than the first axis, and is connected to the first rotary element through the power transmission mechanism. Thus, it is possible to reduce an axial dimension of the first drive unit. Further, the brake mechanism is provided on the rotary shaft which is rotatable about the rotary axis other than the first axis and which constitutes a part of the power transmission mechanism. Thus, it is possible to reduce an axial dimension of the first drive unit. Therefore, the axial dimension of the first drive unit can be made small in the drive apparatus that is capable of establishing BEV mode for driving the vehicle by the second electric motor.

In the drive apparatus according to the second aspect of the invention, the power transmission mechanism is constructed such that the rotary shaft, on which the brake mechanism is disposed, is to be rotated at a higher speed than the first rotary element. Thus, it is possible to reduce a torque inputted to the brake mechanism from the planetary gear device and accordingly to reduce a required strength of the brake mechanism.

In the drive apparatus according to the third aspect of the invention, the power transmission mechanism includes the motor drive gear which is disposed on the second axis, the motor driven gear which is disposed on the first axis, and the idler gear which is disposed on the rotary axis other than the first and second axes. Thus, by providing the brake mechanism on the rotary shaft on which the motor drive gear or the idler gear is mounted, it is possible to reduce the axial dimension of the first drive unit.

In the drive apparatus according to the fourth aspect of the invention, the above-described one of the motor drive gear and the idler gear, which is mounted on the rotary shaft, has a fewer number of teeth than the other of the motor drive gear and the idler gear, so that the brake mechanism is provided on the rotary shaft on which the above-described one of the motor drive gear and the idler gear having a fewer number of teeth is mounted. Thus, the brake mechanism is provided on the rotary shaft on which the torque inputted to the brake mechanism from the planetary gear device is smaller, which is advantageous in terms of strength of the brake mechanism.

In the drive apparatus according to the fifth aspect of the invention, the motor driven gear is the helical gear having the helix angle that is set such that the direction of the thrust load generated in the motor driven gear owing to the torque, which is generated by the second electric motor to cause the vehicle to run in the forward direction with the rotation of the first rotary element being stopped, is opposite to the direction toward the first rotary element. Thus, a maximum value of the load inputted to the planetary gear device from the motor driven gear is reduced so that it is possible to reduce a required strength of the planetary gear device.

In the drive apparatus according to the sixth aspect of the invention, the power transmission mechanism includes the motor drive gear disposed on the second axis and the motor driven gear disposed on the first axis, such that the motor drive gear and the motor driven gear mesh with each other, or are connected to each other through the connecting member that is also included in the power transmission mechanism. Thus, by providing the brake mechanism on the rotary shaft on which the motor drive gear is mounted, it is possible to reduce the axial dimension of the first drive unit.

In the drive apparatus according to the seventh aspect of the invention, the motor driven gear is the helical gear having the helix angle that is set such that the direction of the thrust load generated in the motor driven gear owing to the torque, which is generated by the second electric motor to cause the vehicle to run in the forward direction with the rotation of the first rotary element being stopped, is opposite to the direction toward the first rotary element. Thus, the maximum value of the load inputted to the planetary gear device from the motor driven gear is reduced so that it is possible to reduce the required strength of the planetary gear device.

In the drive apparatus according to the eighth aspect of the invention, the first drive unit further includes the torque limiter configured to limit the torque transmitted between the first drive shaft and the brake mechanism. Thus, even when an excessively large torque is inputted from the first drive shaft with the brake mechanism being in an engaged state, it is possible to prevent an excessively large load from being applied to the brake mechanism and also to rotary members (such as gears and shafts) in a power transmission path between the first drive shaft and the brake mechanism.

In the drive apparatus according to the ninth aspect of the invention, the brake mechanism is constituted by the engagement mechanism configured to limit the torque transmitted between the first drive shaft and the brake mechanism.
Thus, even when an excessively large torque is inputted from the first drive shaft with the brake mechanism being in an engaged state, it is possible to prevent an excessively large load from being applied to the brake mechanism and also to rotary members (such as gears and shafts) in the power transmission path between the first drive shaft and the brake mechanism.

In the drive apparatus according to the tenth aspect of the invention, the first drive unit further includes the parking gear which is to be rotated together with the third rotary element and which is configured to inhibit the rotation of the first drive shaft by being mechanically and unrotatably fixed, and the parking gear is located in the position that overlaps with the third rotary element in the radial direction. Thus, the axial dimension of the first drive unit can be reduced.

In the drive apparatus according to the eleventh aspect of the invention, the third electric motor is connected to the second drive shaft. Thus, in the drive apparatus, it is possible to establish, as the drive mode of the vehicle, various modes including a mode in which a so-called series driving is performed. When the vehicle is driven with the engine being operated, the series driving can be performed, for example, by causing the second drive shaft to be driven by operation of the third electric motor as a prime mover, which is made by an electric power generated by the first electric motor owing to a power of the engine.

### BRIEF DESCRIPTION OF THE DRAWINGS

FIG 1 is a view schematically showing a construction of a vehicle provided with a vehicle drive apparatus (double pinion_U/D type) to which the present invention is applied;
FIG 2 is a view showing a construction of the vehicle drive apparatus, by using a collinear diagram;
FIG 3 is a collinear diagram for explaining BEV mode in which each of first and second electric motors is caused to generate a torque;
FIG 4 is a collinear diagram for explaining BEV mode in which the second electric motor is caused to generate the torque, with a brake being in its engaged state;
FIG 5 is a collinear diagram for explaining BEV mode in which a third electric motor is caused to generate the torque, with the brake being in the engaged state;
FIGS. 6A and 6B are collinear diagrams for explaining first HEV mode (series mode) in which an engine is driven and rotated, and an electric power is transferred between the first and third electric motors, wherein FIG 6A shows a case in which the third electric motor is caused to generate the torque by the electric power generated by the first electric motor, and FIG 6B shows a case in which an engine brake is generated by a power driving of the first electric motor that consumes the electric power generated by the third electric motor;
FIGS. 7A and 7B are collinear diagrams for explaining second HEV mode (input split mode) in which the engine is operated whereby the electric power is transferred between the second and third electric motors, wherein FIG 7A shows a case in which the third electric motor is caused to generate the torque by the electric power generated by the second electric motor, and FIG 7B shows a case in which the second electric motor is caused to generate the torque by the electric power generated by the third electric motor;
FIGS. 8A and 8B are collinear diagrams for explaining third HEV mode (output split mode) in which the engine is operated whereby the electric power is transferred between the first and second electric motors, wherein FIG 8A shows a case in which the second electric motor is caused to generate the torque by the electric power generated by the first electric motor, and FIG 8B shows a case in which the first electric motor is caused to generate the torque by the electric power generated by the second electric motor;
FIG 9 is a view schematically showing a construction of a vehicle provided with a vehicle drive apparatus (double pinion_U/D type) to which the present invention is applied, wherein the vehicle and the vehicle drive apparatus are other than those shown in FIG 1;
FIG 10 is a view showing a construction of the vehicle drive apparatus shown in FIG 9, by using a collinear diagram;
FIG 11 is a view schematically showing a construction of a vehicle provided with a vehicle drive apparatus (single pinion_U/D type) to which the present invention is applied, wherein the vehicle and the vehicle drive apparatus are other than those shown in FIG 1;
FIG 12 is a view showing a construction of the vehicle drive apparatus shown in FIG 11, by using a collinear diagram;
FIG 13 is a collinear diagram for explaining BEV mode in which the second electric motor is caused to generate the torque, with a one-way clutch being in its engaged state;
FIG 14 is a view schematically showing a construction of a vehicle provided with a vehicle drive apparatus (single pinion_U/D type) to which the present invention is applied, wherein the vehicle and the vehicle drive apparatus are other than those shown in FIG 1;
FIG 15 is a view showing a construction of the vehicle drive apparatus shown in FIG 14, by using a collinear diagram;
FIG 16 is a view for explaining that the vehicle drive apparatus shown in FIG 1 is equipped with a damper mechanism;
FIGS. 17A through 17C are views for explaining examples of a torque limiter configured to limit transmission of the torque between a front drive shaft and a brake mechanism, wherein FIG 17A shows an example in which the torque limiter is provided in a power transmission path between the front drive shaft and the brake, FIG 17B shows an example in which function of the torque limiter is provided in the brake, and FIG 17C shows an example in which function of the torque limiter is provided in the one-way clutch;
FIG 18 is a view showing, by way of example, effect where the function of the torque limiter is provided in the power transmission path between the front drive shaft and the brake mechanism;
FIGS. 19A-19D are views for explaining magnitude of the torque generated in the power transmission path between an engine shaft and a first electric motor shaft in various modes in the vehicle drive apparatus shown in FIG 1, in a case in which a differential mechanism of double pinion type is used on under drive (U/D) side, wherein FIG 19A shows an example in Mode1_MG2_BRon, FIG 19B shows an example in Mode2, FIG 19C shows an example in Mode 3 and FIG 19D shows an example in Mode4;
FIG 20 is a view for explaining setting of a helix angle of a motor driven gear in the vehicle drive apparatus shown in FIG 1;
FIGS. 21A-21D are views for explaining magnitude of the torque generated in the power transmission path between the engine shaft and the first electric motor shaft in various modes in the vehicle drive apparatus shown in FIG 11, in a case in which a differential mechanism of single pinion type is used on under drive (U/D) side, wherein FIG 21A shows an example in Mode1_MG2_OWC, FIG 21B shows an example in Mode2, FIG 21C shows an example in Mode3 and FIG 21D shows an example in Mode4;
FIG 22 is a view for explaining setting of the helix angle of the motor driven gear in the vehicle drive apparatus shown in FIG 14;
FIGS. 23A and 23B are views for explaining examples of a front drive unit provided with a parking mechanism, wherein FIG 23A shows a position of the parking mechanism in an embodiment of the present invention, and FIG 23B shows a position of the parking mechanism in a comparative example; and
FIG 24 is a view schematically showing a construction of a vehicle provided with a vehicle drive apparatus (doble pinion_U/D type) of a comparative example.

### DETAILED DESCRIPTION OF PREFERRED EMBODIMENTS

Hereinafter, embodiments of the invention will be described in detail with reference to the accompanying drawings.

### FIRST EMBODIMENT

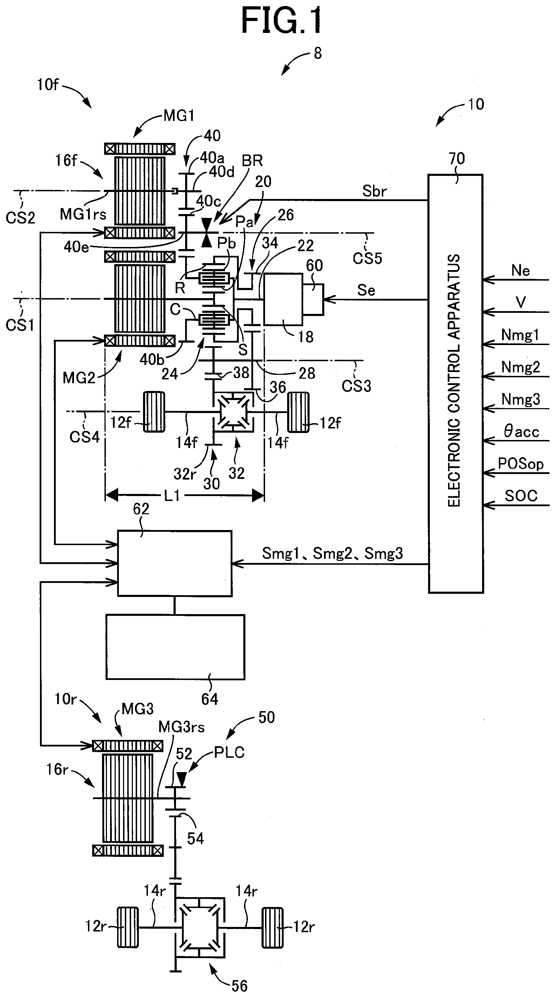

FIG 1 is a view schematically showing a construction of a vehicle 8 provided with a vehicle drive apparatus 10 to which the present invention is applied. As shown in FIG 1, the vehicle 8 includes drive wheels 12 and the vehicle drive apparatus 10 for driving the drive wheels 12. The drive wheels 12 consist of front right and left wheels 12f and rear right and left wheels 12r. The vehicle drive apparatus 10 includes a front drive portion 10f for driving the front wheels 12f and a rear drive portion 10r for driving the rear wheels 12r. The vehicle drive apparatus 10 includes drive shafts 14 for driving the drive wheels 12 and drive units 16 for driving the drive shafts 14. The drive shafts 14 include front right and left drive shafts 14f and rear right and left drive shafts 14r. The drive units 16 includes a front drive unit 16f and a rear drive unit 16r. It is noted that the above-described "right and left" refers to right and left relative to a forward direction of vehicle 8.

The front drive portion 10f includes an engine 18 and the above-described front drive shafts 14f and front drive unit 16f. The rear drive portion 10r includes the above-described rear drive shafts 14r and rear drive unit 16r. Each of the front drive shafts 14f corresponds to "first drive shaft" which is recited in the appended claims and which is provided to drive the front wheel 12f as one of the front and rear wheels 12f, 12r. Each of the rear drive shafts 14r corresponds to "second drive shaft" which is recited in the appended claims and which is provided to drive the rear wheel 12r as the other of the front and rear wheels 12f, 12r. The front drive unit 16f and the rear drive unit 16r correspond to "first drive unit" and "second drive unit", respectively, which are recited in the appended claims and which are provided to drive the front drive shafts 14f and the rear drive shafts 14r, respectively.

The front drive unit 16f includes a first electric motor MG1, a second electric motor MG2, a front power transmission mechanism 20, an input shaft 22 and a differential mechanism 24. The rear drive unit 16r includes a third electric motor MG3 and a rear power transmission mechanism 50.

The vehicle 8 is a hybrid electric vehicle (HEV) or a plug-in hybrid electric vehicle (PHEV), and is an all-wheel drive vehicle in which the front wheels 12f and the rear wheels 12r are can be driven independently from one another. All wheel drive (AWD) and four wheel drive (4WD) are synonymous with each other. The vehicle drive apparatus 10 is capable of performing front-wheel drive for transmitting a torque to only the front wheels 12f, and also rear-wheel drive for transmitting the torque to only the rear wheels 12r.

The engine 18 is a known internal combustion engine, for example. An engine torque Te, which is the torque of the engine 18, is controlled with an engine control device 60 being controlled by an electronic control apparatus 70. The engine control device 60 is provided in the front drive portion 10f, and includes a throttle actuator, a fuel injection device and a fuel ignition device.

Each of the first electric motor MG1, second electric motor MG2 and third electric motor MG3 is a so-called motor generator, i.e., a rotary electric machine having a function serving as a prime mover configured to generate a mechanical power from an electric power and also a function serving as an electric generator configured to generate the electric power from the mechanical power. The first, second and third electric motors MG1, MG2, MG3 are connected to a battery 64 provided in the vehicle drive apparatus 10, through an inverter 62 that is also provided in the vehicle drive apparatus 10. The torque of each of the first, second and third electric motors MG1, MG2, MG3 is controlled with the inverter 62 being controlled by the electronic control apparatus 70. The torque of the first electric motor MG1, the torque of the second electric motor MG2 and the torque of the third electric motor MG3 will be referred to as "first electric motor torque Tmg1", "second electric motor torque Tmg2" and "third electric motor torque Tmg3", respectively. The torque of each electric motor serves as a power driving torque when the electric motor functions as the prime mover, and serves as a regenerative torque when the electric motor functions as the electric generator. The battery 64 is an electric-power storage device configured to supply and receive the electric power to and from the first, second and third electric motors MG1, MG2, MG3. The first, second and third electric motors MG1, MG2, MG3 are controlled through the inverter 62 such that the electric power is supplied and received to and from all of them simultaneously. The term "simultaneously" means that the first, second and third electric motors MG1, MG2, MG3 are placed in power-driving or regeneration enabling states independently at the same time.

The front power transmission mechanism 20 is a first power transmission mechanism provided in a power transmission path between the differential mechanism 24 and the front drive shafts 14f (i.e., front wheels 12f). The front power transmission mechanism 20 includes a pair of counter gears 26, a counter driven shaft 28, a pair of final gears 30 and a front differential gear device 32.

The input shaft 22 is a rotary member connecting between the engine 18 and the differential mechanism 24. The pair of counter gears 26 is a first pair of gears consisting of a counter drive gear 34 and a counter driven gear 36 meshing with each other. The pair of final gears 30 is a second pair of gears consisting of a final drive gear 38 and a final driven gear 32r meshing with each other. The counter driven shaft 28 is a rotary shaft disposed in parallel with the front drive shafts 14f. The counter driven gear 36 and the final drive gear 38 are arranged in parallel with each other, and are disposed on the counter driven shaft 28 such that the counter driven gear 36 and the final drive gear 38 are unrotatable relative to the counter driven shaft 28. The final drive gear 38 has a smaller diameter than the counter driven gear 36. The final driven gear 32r is a ring gear of the front differential gear device 32, and serves as an input rotary member of the front differential gear device 32. The front differential gear device 32 is a differential gear device to which the front drive shafts 14f are connected. The differential mechanism 24 and the front drive shafts 14f are connected through the front power transmission mechanism 20, for example.

The differential mechanism 24 corresponds is a planetary gear device of double pinion type, which includes a sun gear S, pinion gears Pa, Pb, a carrier C and a ring gear R. The carrier C supports the pinion gears Pa, Pb such that each of the pinion gears Pa, Pb is rotatable about its axis and revolvable about a first axis CS1. The ring gear R meshes with the sun gear S through the pinion gears Pa, Pb. The pinion gears Pa, Pb consist of a plurality of pairs of pinion gears meshing with each other. The sun gear S is connected to the second electric motor MG2. The carrier C is connected to the engine 18 and the first electric motor MG1. The ring gear R is connected to the front drive shafts 14f through the pair of counter gears 26 and the pair of final gears 30, for example.

The engine 18, the second electric motor MG2, the differential mechanism 24 and the counter drive gear 34 are disposed on the first axis CS1 which is a rotation axis of the differential mechanism 24 and which is parallel with the counter driven shaft 28. The first electric motor MG1 is disposed on a second axis CS2 which is parallel with the first axis CS1. The counter driven gear 36 and the final drive gear 38 are disposed on a third axis CS3 which is a rotation axis of the counter driven shaft 28. The front differential gear device 32 and the front drive shafts 14f are disposed on a fourth axis CS4 which is a rotation axis of the front drive shafts 14f. As compared with a case in which the first electric motor MG1 is disposed on the first axis CS1, a size of the front drive portion 10f in a direction of the first axis CS1, i.e., an axial dimension of the front drive unit 16f, can be made smaller, by disposing the first electric motor MG1 on the second axis CS2.

The engine 18 is connected to the carrier C of the differential mechanism 24 through the input shaft 22. The first electric motor MG1 is disposed on the second axis CS2 that is different from the first axis CS1. The front drive unit 16f further includes a power transmission mechanism 40 through which the first electric motor MG1 is connected to the carrier C. The first electric motor MG1 is connected to the carrier C through the power transmission mechanism 40. The first electric motor MG1 is located in a position such that a part or entirety of the first electric motor MG1 overlaps with a range from a position of the engine 18 to a position of the second electric motor MG2 on the first axis CS1 when viewed radially from the first axis CS1.

The power transmission mechanism 40 includes a motor drive gear 40a, a motor driven gear 40b, an idler gear 40c, a motor drive shaft 40d and an idler shaft 40e, for example. The motor drive shaft 40d is a rotary shaft disposed on the second axis CS2, and is integrally connected to a rotor shaft MG1rs of the first electric motor MG1 by a spline engagement, so as not to be rotatable relative to the rotor shaft MG1rs of the first electric motor MG1. The motor drive gear 40a is mounted on the motor drive shaft 40d, so as not to be rotatable relative to the motor drive shaft 40d. The idler shaft 40e is a rotary shaft disposed on the fifth axis CS5, which is a rotary axis parallel to the first axis CS1. The idler gear 40c is mounted on the idler shaft 40e, so as not to be rotatable relative to the idler shaft 40e. The motor drive gear 40a is disposed on the second axis CS2, and is connected to the first electric motor MG1. The motor driven gear 40b is disposed on the first axis CS1, and is connected to the carrier C. The idler gear 40c is disposed on the fifth axis CS5 that is other than the first and second axes CS1, CS2, and meshes with the motor drive gear 40a and the motor driven gear 40b. Each of the motor drive gear 40a and the idler gear 40c has a smaller diameter and fewer teeth than the motor driven gear 40b, so that the power transmission mechanism 40 functions as a reduction mechanism, for example. In other words, the power transmission mechanism 40 is constructed such that each of the motor drive shaft 40d and the idler shaft 40e is to be rotated at a higher speed than the carrier C as the first rotary element RE1.

The front drive unit 16f further includes a brake BR. The brake BR is provided on the idler shaft 40e, and is connected at one of its opposite end portions to the idler shaft 40e and at the other of the opposite end portions to a non-rotatable member (not shown). The non-rotatable member, to which the brake BR is connected, is a casing that houses the front drive unit 16f, for example. The brake BR is an engagement device that is operated by an electrically or hydraulically operated actuator, for example, so as to connect between members at the opposite end portions. The brake BR functions as a brake mechanism configured to selectively stop rotation of the carrier C. The carrier C is selectively made non-rotatable and rotatable by operation of the brake BR.

The rear power transmission mechanism 50 is a second power transmission mechanism provided in a power transmission path between the third electric motor MG3 and the rear drive shafts 14r, i.e., the rear wheels 12r. The rear power transmission mechanism 50 includes an output gear 52, a rear counter gear 54 and a rear differential gear device 56. The output gear 52 is fixedly disposed on the rotor shaft MG3rs of the third electric motor MG3 so as to be unrotatable relative to the rotor shaft MG3rs, and meshes with the rear counter gear 54. The output gear 52 and the rear differential gear device 56 are connected through the rear counter gear 54. The rear differential gear device 56 is a differential gear device to which the rear drive shafts 14r are connected. The third electric motor MG3 is connected to the rear drive shafts 14r through the rear power transmission mechanism 50, for example. The output gear 52 has a smaller diameter than the rear counter gear 54, and the output gear 52 and the rear counter gear 54 cooperate with each other to function as a reduction mechanism, for example.

The rear drive unit 16r further includes a parking mechanism PLC. The parking mechanism PLC has an end portion connected to a non-rotatable member (not shown). The parking mechanism PLC is operated by, for example, an electrically-operated actuator or a manually-operated mechanical actuator, and has another end portion that is to be engaged with or disengaged from the output gear 52 by operation of the actuator. The non-rotatable member to which the parking mechanism PLC is connected is, for example, a casing that houses the rear drive unit 16r, for example. The parking mechanism PLC is a known parking lock device that switches between a parking lock state in which the output gear 52 is mechanically fixed so as to be unrotatable and a non-parking lock state in which the output gear 52 is rotatable. The output gear 52 is a rotary member that is to be rotated together with the rear drive shafts 14r. The output gear 52 and rear drive shafts 14r are selectively rotatable and unrotatable by operation of the parking mechanism PLC.

The vehicle drive apparatus 10 further includes the electronic control apparatus 70 as a controller that is configured to control the vehicle drive apparatus 10, for example. The electronic control apparatus 70 includes a so-called microcomputer incorporating a CPU, a ROM, a RAM and an input-output interface. The CPU performs various control operations of the vehicle 8, by processing various input signals, according to control programs stored in the ROM, while utilizing a temporary data storage function of the RAM. For example, the electronic control apparatus 70 controls outputs of the engine 18, the first electric motor MG1, the second electric motor MG2 and the third electric motor MG3, and also controls switching of a drive mode of the vehicle 8, which will be described later. The electronic control apparatus 70 is sectioned into a portion for general control, a portion for controlling the engine 18 and a portion for controlling the electric motors MG1, MG2 and MG3, as needed.

The electronic control apparatus 70 receives various input signals based on values detected by respective sensors provided in the vehicle 8. Specifically, the electronic control apparatus 70 receives output signals indicative of an engine rotational speed Ne, a vehicle running speed V, a first-electric-motor rotational speed Nmg1, a second-electric-motor rotational speed Nmg2, a third-electric-motor rotational speed Nmg3, an accelerator opening degree θacc, a shift operation position POSop and a charged amount (state of charge) SOC, for example. The shift operation position POSop represents which one of lever positions such as "P", "R", "N", "D" a shift lever of a shift operation device is currently placed in. The charged amount SOC is a remaining charge of a battery 64, and is calculated based on a battery charge/discharge current and/or a battery voltage, for example.

From the electronic control apparatus 70, various kinds of command signals are outputted to various devices (such as the engine control device 60, inverter 62 and brake BR) provided in the vehicle 8. The various kinds of command signals are, for example, an engine control command signal Se, a first-electric-motor control command signal Smg1, a second-electric-motor control command signal Smg2, a third-electric-motor control command signal Smg3 and a brake control command signal Sbr. The engine control command signal Se is a command signal for an intake amount, an ignition timing and a fuel injection amount, for example, for controlling the engine 18. The first-electric-motor control command signal Smg1 is a command signal for a first electric motor current, for example, for controlling the first electric motor MG1. The second-electric-motor control command signal Smg2 is a command signal for a second electric motor current, for example, for controlling the second electric motor MG2. The third-electric-motor control command signal Smg3 is a command signal for a third electric motor current, for example, to control the third electric motor MG3. The brake control command signal Sbr is a request signal to control the brake BR to its ON or OFF state. It is noted that, in the engagement device, the ON state is synonymous with an engaged state (= connecting state) and the OFF state is synonymous with a released state (= disconnecting state).

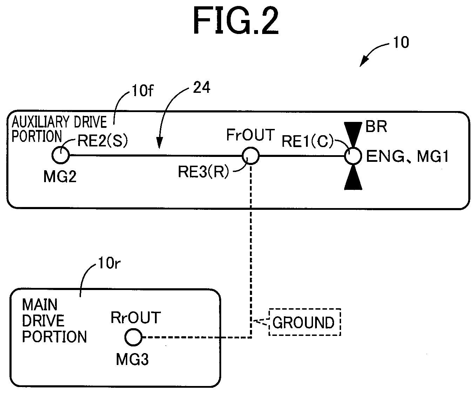

FIG 2 is a view showing a construction of the vehicle drive apparatus 10, by using a collinear diagram. The rear drive portion 10r is a main drive portion to be used for driving in preference to the front drive portion 10f, for example. Thus, the front drive portion 10f is to be used as an auxiliary drive portion. In FIG 2, "FrOUT" represents the front wheels 12f, and "RrOUT" represents the rear wheels 12r.

The differential mechanism 24 of the front drive portion 10f includes three rotary elements consisting of a first rotary element RE1, a second rotary element RE2 and a third rotary element RE3. Each of the rotary elements RE1-RE3 of the differential mechanism 24 is connected to an actuator. The collinear diagram of FIG 2 shows the three rotary elements of the differential mechanism 24 arranged in a straight line. Expressing using the collinear diagram, the first rotary element RE1 is the carrier C. The first rotary element RE1 is connected to the engine 18 and the first electric motor MG1. The second rotary element RE2 is the sun gear S. The second rotary element RE2 is connected to the second electric motor MG2. The third rotary element RE3 is the ring gear R. The third rotary element RE3 is connected to the front drive shafts 14f, i.e., the front wheels 12f. The brake BR corresponds to "brake mechanism" recited in the appended claims, and is configured to stop rotation of the first rotary element RE1 by being placed in an engaged state.

The third electric motor MG3 of the rear drive portion 10r is connected to rear wheels 12r, and can therefore be considered to be connected to the front wheels 12f through a ground (see dashed line in FIG 2). It is possible to drive the vehicle 8 with the third electric motor MG3 being considered to be connected to the front wheels 12f, since the first, second and third electric motors MG1, MG2, MG3 are controlled such that the electric power is transferred among the first, second and third electric motors MG1, MG2, MG3 simultaneously.

The electronic control apparatus 70 is configured to control the engine 18 and the first through third electric motors MG1, MG2, MG3, and to place the drive mode of the vehicle 8 into a selected one of a plurality of modes.

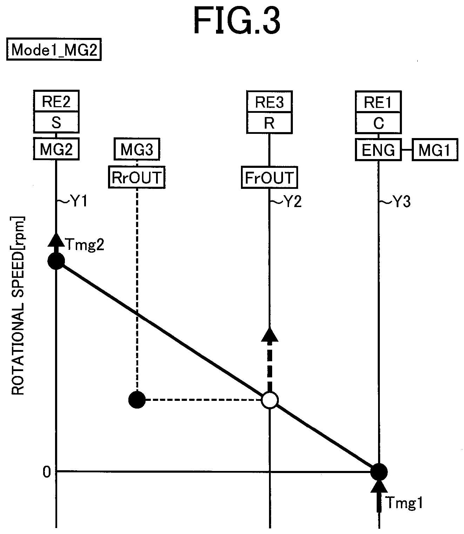

The plurality of modes into which the drive mode of the vehicle 8 can be placed, will be described with reference to FIGS. 3-8. Each of FIGS. 3-8 shows relative rotational speeds of the rotary elements RE1-RE3 of the differential mechanism 24 in the collinear diagram of FIG 2. In collinear diagram of each of FIGS. 3-8, vertical lines Y1-Y3 are arranged in this order as seen from a left side in each of FIGS. 3-8. The vertical line Y1 represents the rotational speed of the sun gear S as the second rotary element RE2 to which the second electric motor MG2 is connected. The vertical line Y2 represents the rotational speed of the ring gear R as the third rotary element RE3 to which the front wheels 12f (see "FrOUT" in each of FIGS. 3-8) are connected. The vertical line Y3 represents the rotational speed of the carrier C as the first rotary element RE1 to which the engine 18 (see "ENG" in each of FIGS. 3-8) and the first electric motor MG1 are connected. Each of FIGS. 3-8 also shows that the third electric motor MG3 connected to the rear wheels 12r (see "RrOUT" in each of FIGS. 3-8) is connected to the front wheels 12f through the ground. Further, each arrow shows the magnitude and direction of the torque converted onto an axis of a corresponding one of the rotary element RE1-RE3, and each solid arrow shows the torque outputted by the corresponding actuator while dashed arrow shows the torque transmitted mechanically.

FIG 3 is a collinear diagram for explaining Mode1_MG2, i.e., BEV mode as one of kinds of the Mode1 enabling the BEV driving, in which each of the first and second electric motors MG1, MG2 is caused to generate the torque. The Mode1_MG2 is one of the plurality of modes into which the drive mode of the vehicle 8 can be placed. In the Mode1_MG2, the BEV driving is performed, with each of the first and second electric motors MG1, MG2 being caused to generate the torque, and with the engine 18 being stopped. In the Mode1_MG2, each of the first and second electric motors MG1, MG2 supplies and receives the electric power to and from the battery 64, generating the torque, such that a moment around the third rotary element RE3 becomes zero thereby enabling the BEV driving. In this instance, the first electric motor torque Tmg1 is controlled such that drag of engine 18 does not occur, namely, such that the rotational speed of the first rotary element RE1 becomes zero. In the Mode1_MG2, the differential mechanism 24 is in a differential state, and the torque is generated from each of the first and second electric motors MG1, MG2, whereby the torque is mechanically transmitted to the third rotary element RE3 as an output element. It is noted that, in the Mode1_MG2, it is also possible to increase the drive torque by causing the third electric motor MG3 to generate the torque.

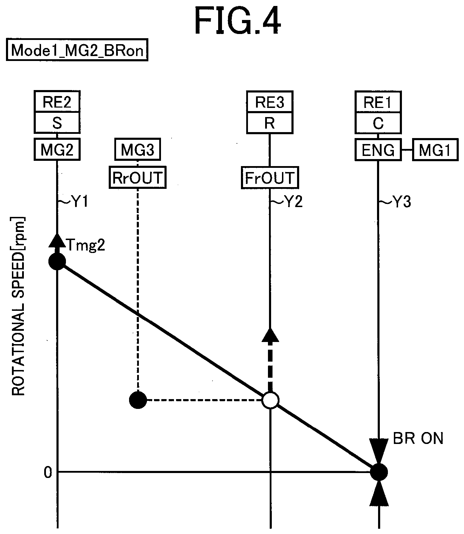

FIG 4 is a collinear diagram for explaining Mode1_MG2_BRon, i.e., BEV mode as another one of kinds of the Mode1 enabling the BEV driving, in which the second electric motor MG2 is caused to generate the torque, with the brake BR being in the engaged state. The Mode1_MG2_BRon is one of the plurality of modes into which the drive mode of the vehicle 8 can be placed. In the Mode1_MG2_BRon, the BEV driving is performed, with the second electric motor MG2 being caused to generate the torque, with the brake BR being in the engaged state, and with the engine 18 being stopped. In the Mode1_MG2_BRon, the brake BR is placed in the engaged state whereby the rotational speed of the first rotary element RE1 is fixed to zero, so that the BEV driving in either forward or reverse direction is enabled by the second electric motor MG2 with the electric power supplied from the battery 64 without the first electric motor MG1 being caused to generate the torque. In this instance, the BEV driving is enabled with a maximum torque of the second electric motor MG2. In the Mode1_MG2_BRon, the differential mechanism 24 is in the differential state, and the torque is generated from the second electric motor MG2, whereby the torque is mechanically transmitted to the third rotary element RE3 as the output element. It is noted that, in the Mode1_MG2_BRon, it is also possible to increase the drive torque by causing the third electric motor MG3 to generate the torque.

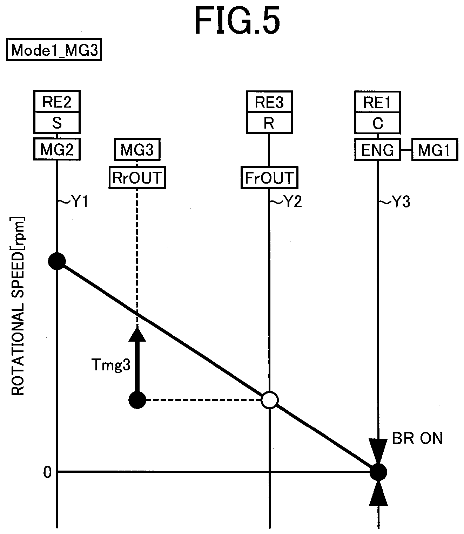

FIG 5 is a collinear diagram for explaining Mode1_MG3, i.e., BEV mode as still another one of kinds of the Mode1 enabling the BEV driving, in which the third electric motor MG3 is caused to generate the torque, with the brake BR being in the engaged state. The Mode1_MG3 is one of the plurality of modes into which the drive mode of the vehicle 8 can be placed. In the Mode1_MG3, the BEV driving is performed, with the third electric motor MG3 being caused to generate the torque, with the brake BR being in the engaged state, and with the engine 18 being stopped. In the Mode1_MG3, the brake BR is placed in the engaged state whereby the rotational speed of the first rotary element RE1 is fixed to zero, so that the BEV driving in either forward or reverse direction is enabled by the third electric motor MG3 with the electric power supplied from the battery 64 without the engine 18 and the first electric motor MG1 being dragged.

It is noted that, in the Mode1_MG3, it is also possible to increase the drive torque by causing the second electric motor MG2 to generate the torque. Further, in the Mode1_MG3, the BEV driving can be performed also by causing the third electric motor MG3 to generate the torque, even without the brake BR being placed in the engaged state. That is, the Mode1_MG3 may be also a mode in which the BEV driving is performed with the third electric motor MG3 being caused to generate the torque and with the engine 18 being stopped.

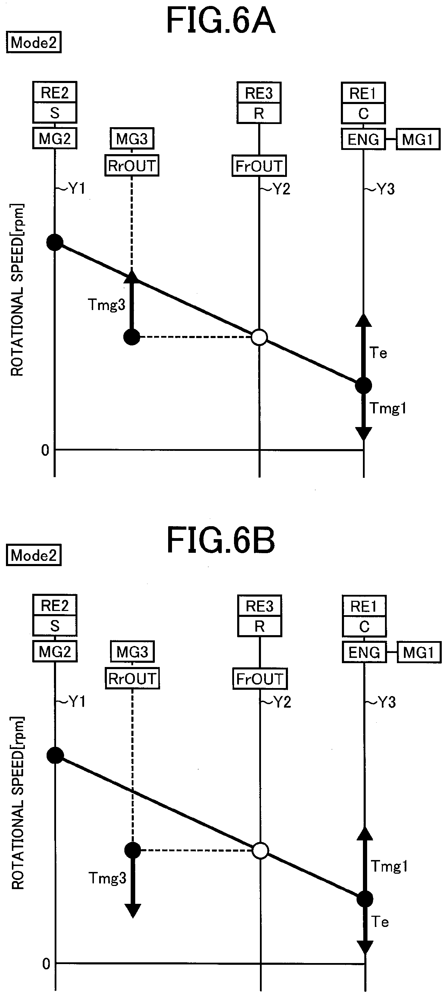

FIGS. 6A and 6B are collinear diagrams for explaining first HEV mode, i.e., Mode2 in which the engine 18 is driven and rotated , and the electric power is transferred between the first and third electric motors MG1, MG2, wherein FIG 6A shows a case in which the third electric motor MG3 is caused to generate the torque by the electric power generated by the first electric motor MG1, and FIG 6B shows a case in which an engine brake is generated by a power driving of the first electric motor MG1 that consumes the electric power generated by the third electric motor MG3. The Mode2 is one of the plurality of modes into which the drive mode of the vehicle 8 can be placed. The Mode2 is a mode enabling a hybrid driving, i.e., HEV driving, and is a series mode enabling a series driving with the engine 18 as the power source.

In the case shown in FIG 6A, the Mode2 includes a mode in which the first electric motor MG1 is operated as the electric generator by operation of the engine 18, and the third electric motor MG3 is operated as the prime mover by the electric power generated by the first electric motor MG1. The Mode2 is a mode which can realize an electric-continuously-variable transmission function that performs a series mode operation in which the power inputted by the engine 18 is outputted to the rear wheels 12r with the brake BR being placed in the released state. In the Mode2, a power conversion is made between the engine 18 and the first electric motor MG1, and between the first electric motor MG1 and the third electric motor MG3. The power conversion means a conversion between the mechanical power and the electric power. In the Mode2, an explosive vibration torque of the engine 18 is not transmitted to the front drive shafts 14f, so that the Mode2 is advantageous for suppressing NV. The term "NV" is a general term for noise and vibration such as muffled sound generated in the vehicle 8, and represents at least one of the noise and vibration in the vehicle 8. Therefore, the Mode2 is useful for use in a low running speed and low load range in which quietness is required. In addition, since the Mode2 is less subjected to restrictions such as the muffled sound when an operating point of the engine 18 is to be set, it is possible to operate the engine 18 at an operating point at which a fuel efficiency is excellent.

In the case shown in FIG 6B, the Mode2 includes a mode in which the power driving of the first electric motor MG1 is performed with the electric power generated by the third electric motor MG3 that is operated as the electric generator, whereby the engine 18 is driven and rotated. In this Mode2, the electric power consumed by the power driving of the first electric motor MG1 is covered by the regenerative power of the third electric motor MG3, which is generated by a kinetic energy of the vehicle 8, and the engine rotational speed Ne is increased by the power driving of the first electric motor MG1. The engine 18 is in a fuel cut state, and the engine rotational speed Ne is increased by the first electric motor torque Tmg1, and the torque converted onto the axis of the first rotary element RE1 is considered to be a negative torque. Even where the engine 18 is operated with the fuel being injected thereto, if the engine rotational speed Ne is increased by the first electric motor torque Tmg1 to a higher speed vale than when the engine 18 is in an independent operating state, the torque converted onto the axis of the first rotary element RE1 is considered to be a negative torque. The positive direction of the torque is the direction of the torque in a case in which the engine 18 is operated. The case in which the engine 18 is operated is synonymous with a case in which the positive torque is generated by the engine 18 as such. In the Mode2 shown in FIG 6B, the kinetic energy of the vehicle 8 is converted into the electric power through the third electric motor MG3, and the electric power generated by the third electric motor MG3 is converted into the power through the first electric motor MG1. In this way, the engine brake can be applied in the Mode2. Where the engine brake is applied in the Mode2, too, the explosive vibration torque of the engine 18 is not transmitted to the front drive shafts 14f, which is advantageous for suppressing the NV.

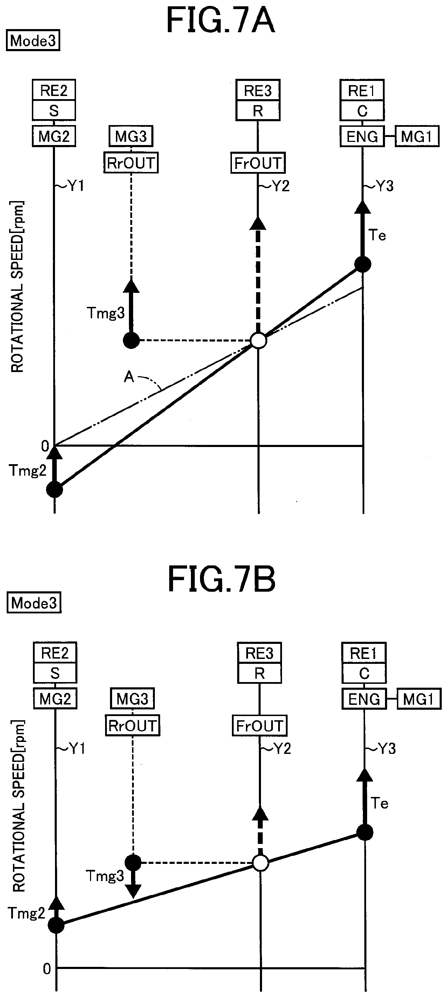

FIGS. 7A and 7B are collinear diagrams for explaining second HEV mode, i.e., Mode3 in which the engine 18 is operated whereby the electric power is transferred between the second and third electric motors MG2, MG3, wherein FIG 7A shows a case in which the third electric motor MG3 is caused to generate the torque by the electric power generated by the second electric motor MG2, and FIG 7B shows a case in which the second electric motor MG2 is caused to generate the torque by the electric power generated by the third electric motor MG3. The Mode3 is one of the plurality of modes into which the drive mode of the vehicle 8 can be placed. The Mode3 is a mode enabling the hybrid driving, i.e., HEV driving, and is an input split mode enabling an input split driving with the engine 18 as the power source. In the Mode3, the differential mechanism 24 is in the differential state, and a reaction force of the engine torque Te is taken by the second electric motor MG2, so that the torque is mechanically transmitted to the third rotary element RE3. The Mode3 is a mode that can realize the electric-continuously-variable transmission function that performs an input split mode operation in which the power inputted by the engine 18 is outputted to the front and rear wheels 12f, 12r with the brake BR being placed in the released state. In the Mode3, the engine brake can be applied. It is noted that the input split mode is a mode in which two electric motors (MG2, MG3) and an engine are connected to three rotary elements of a differential mechanism, and an electric motor (MG3) is placed on the output element (RE3), when expressed using a collinear diagram.

In FIG 7A, double-dashed line A shows a state in which a mechanical point is created in the differential mechanism 24 in which no electrical work is made by setting the rotational speed of the second rotary element RE2 (second electric motor speed Nmg2) to zero so as to set the power of the second electric motor MG2 to zero. In the differential mechanism 24, the rotational speed of the third rotary element RE3 as the output element is set to a deceleration side, i.e., underdrive (U/D) side, relative to the engine rotational speed Ne at this mechanical point. That is, the mechanical point of the differential mechanism 24 is set by a speed reduction ratio. In FIGS. 7A and 7B, the Mode3 is the U/Dinput split mode.

In FIG 7A, the Mode3 includes at least a mode in which the engine 18 is operated whereby the second electric motor MG2 is operated as the electric generator, while the third electric motor MG3 is operated as the prime mover by the electric power generated by the second electric motor MG2. In the Mode3, the torque is mechanically transmitted to the third rotary element RE3, and the electric power generated by the second electric motor MG2 is supplied to the third electric motor MG3 whereby the torque is generated in the third electric motor MG3. In the Mode3, the power conversion is made between the engine 18 and the second electric motor MG2, and between the second electric motor MG2 and the third electric motor MG3. The Mode3 provides a high transmission efficiency in the low running speed and high load range, so that it is useful in the low running speed and high load range, for example.

In FIG 7B, the Mode3 may include a mode in which the engine 18 is operated while the second electric motor MG2 is operated as the prime mover using the electric power generated by the third electric motor MG3. In this Mode3, when the torque is mechanically transmitted to the third rotary element RE3, the second electric motor MG2 is rotated in the forward direction, so that the electric power consumed by the power driving of the second electric motor MG2 is covered by the regenerative power of the third electric motor MG3 using the kinetic energy of the vehicle 8. In the Mode3 shown in FIG 7B, the kinetic energy of the vehicle 8 is converted into the electric power through the third electric motor MG3, and the electric power generated by the third electric motor MG3 is converted into the power through the second electric motor MG2.

The vehicle drive apparatus 10 is controlled to perform the Mode3 shown in FIG 7A during a normal driving in which the drive mode is selected with an energy efficiency being prioritized. On the other hand, the vehicle drive apparatus 10 is controlled to perform the Mode3 shown in FIG 7B, when the drive mode is selected with a power performance being prioritized, without the Mode3 shown in FIG 7A being is not executed.

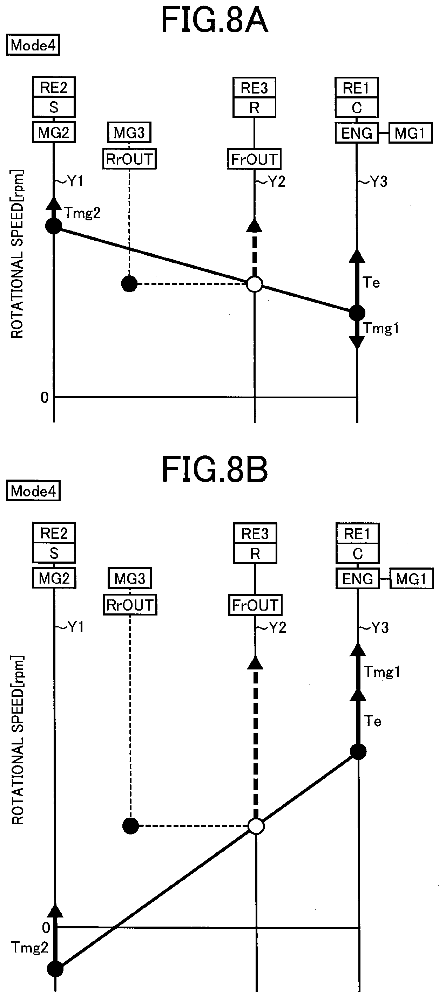

FIGS. 8A and 8B are collinear diagrams for explaining third HEV mode, i.e., Mode4 in which the engine 18 is operated whereby the electric power is transferred between the first and second electric motors MG1, MG2, wherein FIG 8A shows a case in which the second electric motor MG2 is caused to generate the torque by the electric power generated by the first electric motor MG1, and FIG 8B shows a case in which the first electric motor MG1 is caused to generate the torque by the electric power generated by the second electric motor MG2. The Mode4 is one of the plurality of modes into which the drive mode of the vehicle 8 can be placed. The Mode4 is a mode enabling the hybrid driving, i.e., HEV driving, and is an output split mode enabling an output split driving with the engine 18 as the power source. In the Mode4, the differential mechanism 24 is in the differential state, and a reaction force of the engine torque Te is taken by the second electric motor MG2, so that the torque is mechanically transmitted to the third rotary element RE3. The Mode4 is a mode that can realize the electric-continuously-variable transmission function that performs an output split mode operation in which the power inputted by the engine 18 is outputted to the front wheels 12f with the brake BR being placed in the released state. In the Mode3, the engine brake can be applied. Since the mechanical point of the differential mechanism 24 is set by a speed reduction ratio, the Mode4 shown in FIGS. 8A and 8B is U/Doutput split mode. It is noted that the output split mode is a mode in which two electric motors (MG1, MG2) and an engine are connected to three rotary elements of a differential mechanism, and an electric motor (MG1) is placed on the input element (RE1) to which the engine is connected, when expressed using a collinear diagram.

In FIG 8A, the Mode4 includes at least a mode in which the engine 18 is operated whereby the first electric motor MG1 is operated as the electric generator, while the second electric motor MG2 is operated as the prime mover by the electric power generated by the first electric motor MG1. In Mode4, when the torque is mechanically transmitted to the third rotary element RE3, the second electric motor MG2 is rotated in the forward direction, so that the electric power consumed by the power driving of the second electric motor MG2 is covered by the electric power generated by the first electric motor MG1 using the power of the engine 18. In the Mode4, the power of the engine 18 is converted into the electric power through the first electric motor MG1, and the electric power generated by the first electric motor MG1 is converted into the power through the second electric motor MG2. The Mode4 provides a high transmission efficiency in the high running speed range, so that it is useful in the high running speed range, for example.

In FIG 8B, the Mode4 may include a mode in which the engine 18 is operated while the first electric motor MG1 is operated as the prime mover using the electric power generated by the second electric motor MG2. In this Mode4, when the torque is mechanically transmitted to the third rotary element RE3, the second electric motor MG2 is rotated in the reverse direction, so that the electric power generated by the second electric motor MG2 is supplied to the first electric motor MG1 whereby the torque is generated in the first electric motor MG1. In the Mode4 shown in FIG 8B, the power of the engine 18 is converted into the electric power through the second electric motor MG2, and the electric power generated by the second electric motor MG2 is converted into the power through the first electric motor MG1.

The vehicle drive apparatus 10 is controlled to perform the Mode4 shown in FIG 8A during the normal driving in which the drive mode is selected with the energy efficiency being prioritized. On the other hand, the vehicle drive apparatus 10 is controlled to perform the Mode4 shown in FIG 8B, when the drive mode is selected with a power performance being prioritized, without the Mode4 shown in FIG 8A being is not executed.

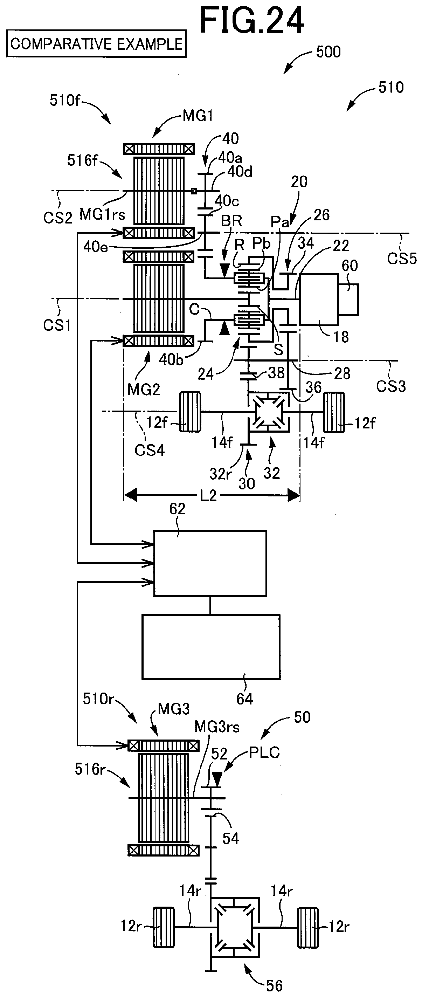

By the way, it is desirable to reduce the axial dimension of the front drive unit 16f. FIG 24 is a view schematically showing a construction of a vehicle 500 provided with a vehicle drive apparatus 510 (including a front drive portion 510f and a rear drive portion 510r) of a comparative example. The vehicle drive apparatus 510 has a drive unit 516 (including a front drive unit 516f and a rear drive unit 516r) that is substantially the same as the drive unit 16 of the vehicle drive apparatus 10 shown in FIG 1, in terms of connection relationship of each member. However, a position of the brake BR in the front drive unit 516f of the front drive portion 510f is different from that in the front drive unit 16f of the vehicle drive apparatus 10. In the front drive unit 516f of the comparative example, the brake BR is disposed on the first axis CS1. As a result, the axial dimension of the front drive unit 516f is increased (see "L2" in FIG 24). It is noted that the rear drive portion 510r is substantially the same as the rear drive portion 10r, so that the description is not provided.

Referring back to FIG 1, in the front drive unit 16f of the vehicle drive apparatus 10 of the present embodiment, the brake BR is provided on the idler shaft 40e that is disposed on the fifth axis CS5 other than the first axis CS1. That is, in the front drive unit 16f in the present embodiment, the idler shaft 40e constitutes the rotary shaft on which the brake BR is provided. The idler shaft 40e corresponds to "rotary shaft" recited in the appended claims. As compared with a case in which the brake BR is disposed on the first axis CS1, the size of the front drive portion 10f in the direction of the first axis CS1, i.e., the axial dimension of the front drive unit 16f, can be made smaller (see "L1" shown in FIG 1, wherein "L1" is smaller than "L2"shown in FIG 24), by disposing the brake BR on the fifth axis CS5.

As described above, in the present embodiment, the differential mechanism 24 is constructed such that the engine 18 and the first electric motor MG1 are connected to the first rotary element RE1, the second electric motor MG2 is connected to the second rotary element RE2, and the front drive shafts 14f are connected to the third rotary element RE3. The front drive unit 16f further includes the brake BR configured to stop rotation of the first rotary element RE1. Thus, the vehicle drive apparatus 10 is capable of establishing, as the drive mode of the vehicle 8, various modes including a mode for driving the vehicle 8 by the second electric motor MG2 as the power source with the engine 18 being stopped. Further, the second electric motor MG2 is disposed on the first axis CS1, while the first electric motor MG1 is disposed on the second axis CS2 that is other than the first axis CS1, and is connected to the first rotary element RE1 through the power transmission mechanism 40. Thus, it is possible to reduce the axial dimension of the front drive unit 16f. Further, the brake BR is provided on the rotary shaft (e.g., the idler shaft 40e) which is rotatable about the rotary axis (e.g., the fifth axis CS5) other than the first axis CS1 and which constitutes a part of the power transmission mechanism 40. Thus, it is possible to reduce the axial dimension of the front drive unit 16f. Therefore, the axial dimension of the front drive unit 16f can be made small in the vehicle drive apparatus 10 that is capable of establishing the BEV mode for driving the vehicle 8 by the second electric motor MG2.

In the present embodiment, the power transmission mechanism 40 is constructed such that the rotary shaft, on which the brake BR is disposed, is to be rotated at a higher speed than the first rotary element RE1. Thus, it is possible to reduce the torque inputted to the brake BR from the differential mechanism 24 and accordingly to reduce the required strength of the brake BR.

In the present embodiment, the power transmission mechanism 40 includes the motor drive gear 40a, the motor driven gear 40b and the idler gear 40c. Thus, by providing the brake BR on the idler shaft 40e on which the idler gear 40c is mounted, it is possible to reduce the axial dimension of the front drive unit 16f.

In the present embodiment, the third electric motor MG3 is connected to the rear drive shafts 14r. Thus, in the vehicle drive apparatus 10, it is possible to establish, as the drive mode of the vehicle, various modes including a mode in which a so-called series driving is performed. When the vehicle 8 is driven with the engine 18 being operated, the series driving can be performed, for example, by causing the rear drive shafts 14r to be driven by operation of the third electric motor MG3 as a prime mover, which is made by the electric power generated by the first electric motor MG1 owing to the power of the engine 18.

There will be described other embodiments of this invention. The same reference signs as used in the above-described first embodiment will be used in the following embodiments, to identify the functionally corresponding elements, and descriptions thereof are not provided.

### SECOND EMBODIMENT

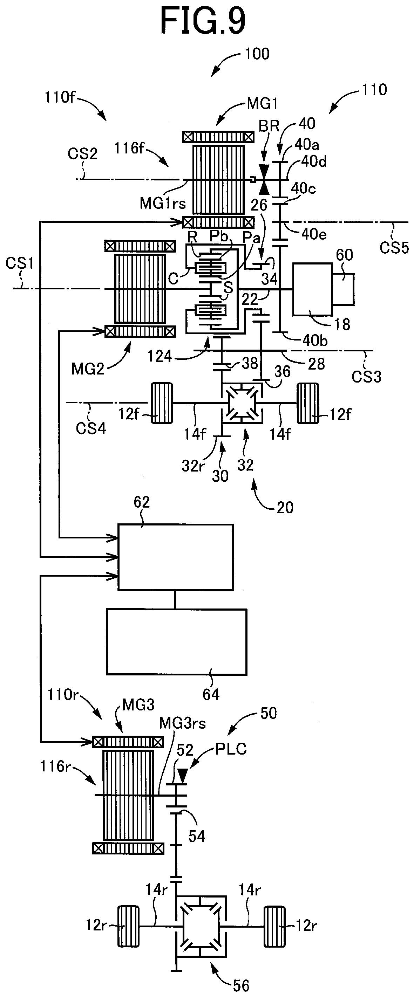

FIG 9 is a view schematically showing a construction of a vehicle 100 provided with a vehicle drive apparatus 110 (including a front drive portion 110f and a rear drive portion 110r) to which the present invention is applied. As shown in FIG 9, the vehicle drive apparatus 110 includes the drive shafts 14 for driving the drive wheels 12 and a drive unit 116 (including a front drive unit 116f and a rear drive unit 116r) for driving the drive shafts 14. The front drive unit 116f includes a differential mechanism 124, and corresponds to "first drive unit" recited in the appended claims. As in the above-described first embodiment, the differential mechanism 124 is connected to the front drive shafts 14f through the front power transmission mechanism 20, for example. The rear drive unit 116r corresponds to "second drive unit" recited in the appended claims.

The differential mechanism 124 is a planetary gear device of double pinion type, which includes a sun gear S, pinion gears Pa, Pb, a carrier C and a ring gear R. The sun gear S is connected to the second electric motor MG2. The ring gear R is connected to the engine 18 and the first electric motor MG1. The carrier C is connected to the front drive shafts 14f through the pair of counter gears 26 and the pair of final gears 30, for example.

The first electric motor MG1 is connected to the input shaft 22 connected to the ring gear R, through the power transmission mechanism 40. In this second embodiment, the motor driven gear 40b is fixedly disposed on the input shaft 22 so as to be unrotatable relative to the input shaft 22. The brake BR is disposed on the motor drive shaft 40d, and is connected at one of its opposite end portions to the motor drive shaft 40d and at the other of the opposite end portions to a non-rotatable member (not shown).

In the front drive unit 116f of the vehicle drive apparatus 110 of this second embodiment, the brake BR is provided on the motor drive shaft 40d which is disposed on the second axis CS2 other than the first axis CS1 and which constitutes a part of the power transmission mechanism 40. That is, in the front drive unit 116f in this second embodiment, the motor drive shaft 40d constitutes the rotary shaft on which the brake BR is provided. The motor drive shaft 40d corresponds to "rotary shaft" recited in the appended claims. As compared with a case in which the brake BR is disposed on the first axis CS1, the size of the front drive portion 110f in the direction of the first axis CS1 can be made smaller.

From a point of view of reducing the axial dimension of the front drive unit 116f, the brake BR may be provided either on the motor drive shaft 40d or the idler shaft 40e (see the above-described first embodiment). However, considering a required strength of the brake BR, it is preferable that the brake BR is provided on one of the motor drive shaft 40d and the idler shaft 40e, through which a smaller torque is to be inputted to the brake BR. In this sense, the brake BR is provided on one of the motor drive shaft 40d and the idler shaft 40e, on which one of the motor drive gear 40a and the idler gear 40c that has a fewer number of teeth is mounted.

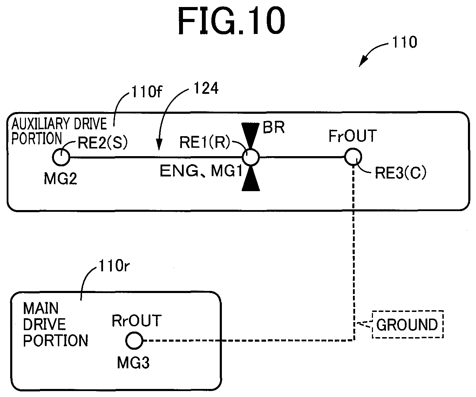

FIG 10 is a view showing a construction of the vehicle drive apparatus 110, by using a collinear diagram. As shown in FIG 10, the differential mechanism 124 of the front drive portion 110f includes three rotary elements consisting of a first rotary element RE1, a second rotary element RE2 and a third rotary element RE3. Each of the rotary elements RE1-RE3 of the differential mechanism 124 is connected to an actuator. Expressing using the collinear diagram, the first rotary element RE1 is the ring gear R. The first rotary element RE1 is connected to the engine 18 and the first electric motor MG1. The second rotary element RE2 is the sun gear S. The second rotary element RE2 is connected to the second electric motor MG2. The third rotary element RE3 is the carrier C. The third rotary element RE3 is connected to the front drive shafts 14f, i.e., the front wheels 12f. The brake BR corresponds to "brake mechanism" recited in the appended claims, and is configured to stop rotation of the first rotary element RE1 by being placed in an engaged state. It is noted that the rear drive portion 110r is substantially the same as the rear drive portion 10r in the above-described first embodiment, so that the description is not provided.

As in the vehicle drive apparatus 10 of the above-described first embodiment, in the vehicle drive apparatus 110, the engine 18 and the first through third electric motors MG1, MG2, MG3 are controlled whereby the drive mode of the vehicle 100 can be placed into a selected one of a plurality of modes.

At the mechanical point of the differential mechanism 124, the rotational speed of the third rotary element RE3, which is the output element, is set to an acceleration side, i.e., to overdrive (O/D) side, relative to the engine rotational speed Ne. In other words, the mechanical point of the differential mechanism 124 is set by a speed increase ratio. Therefore, in the vehicle drive apparatus 110, Mode 3 is the O/D input split mode, and Mode 4 is the O/D output split mode.

As described above, as in the above-described first embodiment, in the present second embodiment, the axial dimension of the front drive unit 116f can be made small in the vehicle drive apparatus 110 that is capable of establishing the BEV mode for driving the vehicle 100 by the second electric motor MG2.

In the present second embodiment, by providing the brake BR on the motor drive shaft 40d on which the motor drive gear 40a is mounted, it is possible to reduce the axial dimension of the front drive unit 116f.

In the present second embodiment, the rotary shaft, on which the brake BR is provided, is the rotary shaft on which one of the motor drive gear 40a and the idler gear 40c having a fewer number of teeth is mounted. Thus, the brake BR is provided on the rotary shaft on which the torque inputted to the brake BR from the differential mechanism 124 is smaller, which is advantageous in terms of strength of the brake BR.

### THIRD EMBODIMENT

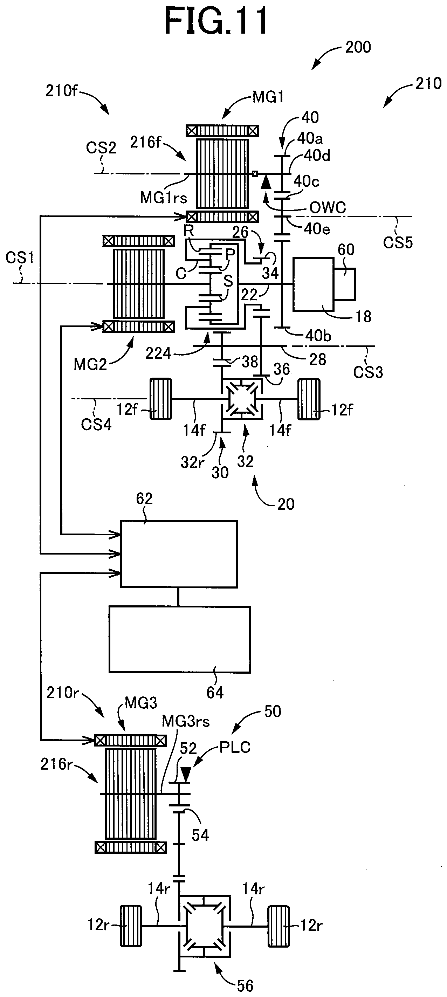

FIG 11 is a view schematically showing a construction of a vehicle 200 provided with a vehicle drive apparatus 210 (including a front drive portion 210f and a rear drive portion 210r) to which the present invention is applied. As shown in FIG. 11, the vehicle drive apparatus 210 includes the drive shafts 14 for driving the drive wheels 12 and a drive unit 216 (including a front drive unit 216f and a rear drive unit 216r) for driving the drive shafts 14. The front drive unit 216f includes a differential mechanism 224, and corresponds to "first drive unit" recited in the appended claims. As in the above-described first embodiment, the differential mechanism 224 is connected to the front drive shafts 14f through the front power transmission mechanism 20, for example. The rear drive unit 216r corresponds to "second drive unit" recited in the appended claims.

The differential mechanism 224 is a planetary gear device of single pinion type, which includes a sun gear S, pinion gears P, a carrier C and a ring gear R. The sun gear S is connected to the second electric motor MG2. The ring gear R is connected to the engine 18 and the first electric motor MG1. The carrier C is connected to the front drive shafts 14f through the pair of counter gears 26 and the pair of final gears 30, for example.

The first electric motor MG1 is connected to the input shaft 22 connected to the ring gear R, through the power transmission mechanism 40. In this third embodiment, the second intermediate gear 40b is fixedly disposed on the input shaft 22 so as to be unrotatable relative to the input shaft 22.

The front drive unit 216f further includes a one-way clutch OWC in place of the brake BR. The one-way clutch OWC is provided on the motor drive shaft 40d, and has two rotary elements consisting of inner and outer rings, which can be rotatable relative to each other, one of which is connected to the motor drive shaft 40d, and the other of which is connected to a non-rotatable member such as a casing (not shown). In the one-way clutch OWC, the one of the inner and outer rings is rotatable relative to the other in a positive rotation direction that is a rotation direction of the engine 18 in operation, and is not rotatable relative to the other in a negative rotation direction that is opposite to the rotation direction of the engine 18 in operation. That is, the one-way clutch OWC is an engagement device which allows the input shaft 22 to be rotated in the positive rotation direction that is the rotation direction of the engine 18, and which inhibits the input shaft 22 from being rotated in the negative rotation direction that is opposite to the rotation direction of the engine 18. The one-way clutch OWC is automatically engaged and released by interaction between the inner and outer rings. Therefore, the one-way clutch OWC does not require a control command signal such as the brake control command signal Sbr for controlling the brake BR to be engaged or released.

In the front drive unit 216f of the vehicle drive apparatus 210 of this third embodiment, the one-way clutch OWC is provided on the motor drive shaft 40d which is disposed on the second axis CS2 other than the first axis CS1. That is, in the front drive unit 216f in this third embodiment, the motor drive shaft 40d constitutes the rotary shaft on which the one-way clutch OWC is provided. As compared with a case in which the one-way clutch OWC is disposed on the first axis CS1, the size of the front drive portion 210f in the direction of the first axis CS1 can be made smaller. From a point of view of reducing the axial dimension of the front drive unit 216f, the one-way clutch OWC may be provided either on the motor drive shaft 40d or the idler shaft 40e. However, considering a required strength of the one-way clutch OWC, it is preferable that the one-way clutch OWC is provided on one of the motor drive shaft 40d and the idler shaft 40e, through which a smaller torque is to be inputted to the one-way clutch OWC. In this sense, the one-way clutch OWC is provided on one of the motor drive shaft 40d and the idler shaft 40e, on which one of the motor drive gear 40a and the idler gear 40c that has a fewer number of teeth is mounted.

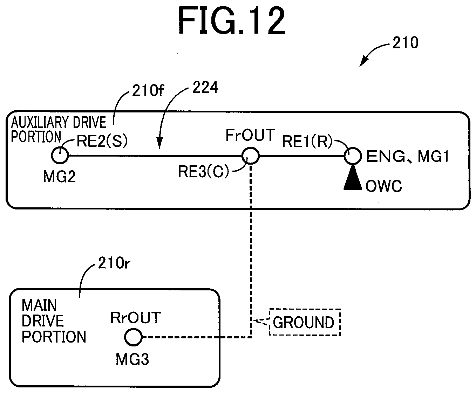

FIG 12 is a view showing a construction of the vehicle drive apparatus 210, by using a collinear diagram. As shown in FIG 12, the differential mechanism 224 of the front drive portion 210f includes three rotary elements consisting of a first rotary element RE1, a second rotary element RE2 and a third rotary element RE3. Each of the rotary elements RE1-RE3 of the differential mechanism 224 is connected to an actuator. Expressing using the collinear diagram, the first rotary element RE1 is the ring gear R. The first rotary element RE1 is connected to the engine 18 and the first electric motor MG1. The second rotary element RE2 is the sun gear S. The second rotary element RE2 is connected to the second electric motor MG2. The third rotary element RE3 is the carrier C. The third rotary element RE3 is connected to the front drive shafts 14f, i.e., the front wheels 12f. The one-way clutch OWC corresponds to "brake mechanism" recited in the appended claims, and is configured to stop rotation of the first rotary element RE1 by being placed in an engaged state. Thus, in the present invention, the brake mechanism, which is configured to stop rotation of the first rotary element RE1 by being placed in the engaged state, may be constituted by the one-way clutch OWC in place of the brake BR. In each of the front drive units 16f, 116f in the above-described first and second embodiments and a front drive unit 316f in the below-described fourth embodiment, too, the one-way clutch OWC may be provided in place of the brake BR. It is noted that the rear drive portion 210r is substantially the same as the rear drive portion 10r in the above-described first embodiment, so that the description is not provided.

As in the vehicle drive apparatus 10 of the above-described first embodiment, in the vehicle drive apparatus 210, the engine 18 and the first through third electric motors MG1, MG2, MG3 are controlled whereby the drive mode of the vehicle 200 can be placed into a selected one of a plurality of modes.

At the mechanical point of the differential mechanism 224, the rotational speed of the third rotary element RE3, which is the output element, is set to a deceleration side, i.e., to underdrive (U/D) side, relative to the engine rotational speed Ne. In other words, the mechanical point of the differential mechanism 224 is set by a speed reduction ratio. Therefore, in the vehicle drive apparatus 210, Mode 3 is the U/D input split mode, and Mode 4 is the U/D output split mode.

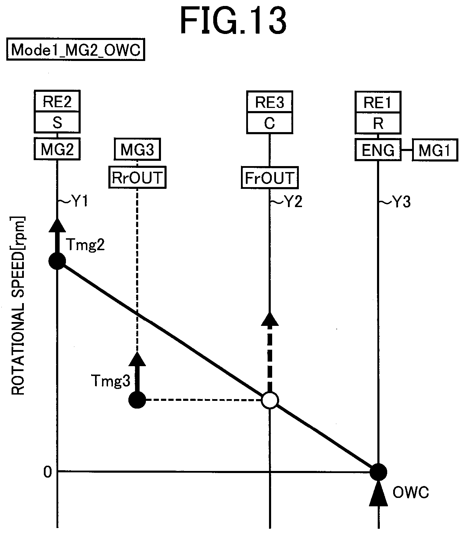

FIG. 13 is a collinear diagram for explaining Mode1_MG2_OWC, i.e., BEV mode in which the second electric motor MG2 is caused to generate the torque, with the one-way clutch OWC being in the engaged state. The Mode1_MG2_OWC is one of kinds of the Mode1 enabling the BEV driving. The Mode1_MG2_OWC is a mode that is to be established in place of the Mode1_MG2 (see FIG. 3) and the Mode1_MG2_BRon (see FIG. 4) in the above-described first embodiment. In FIG 13, the Mode1_MG2_OWC is included in the plurality of modes in which the drive mode can be placed. The Mode1_MG2_OWC is a mode in which the BEV driving is performed by the torque generated by the second electric motor MG2 with the one-way clutch OWC being engaged and with the engine 18 being stopped. In the Mode1_MG2_OWC, the rotational speed of the first rotary element RE1 is fixed to zero due to the engagement of the one-way clutch OWC, so that the BEV driving can be performed by the second electric motor MG2 using the electric power of the battery 64. In this case, the BEV driving can be performed with the maximum torque of the second electric motor MG2. In Mode1_MG2_OWC, as shown in FIG 13, it is also possible to increase the drive torque by causing the third electric motor MG3 to generate the torque.

As described above, in the present third embodiment, the same effects as those of the above-described first and second embodiments can be obtained.

### FOURTH EMBODIMENT

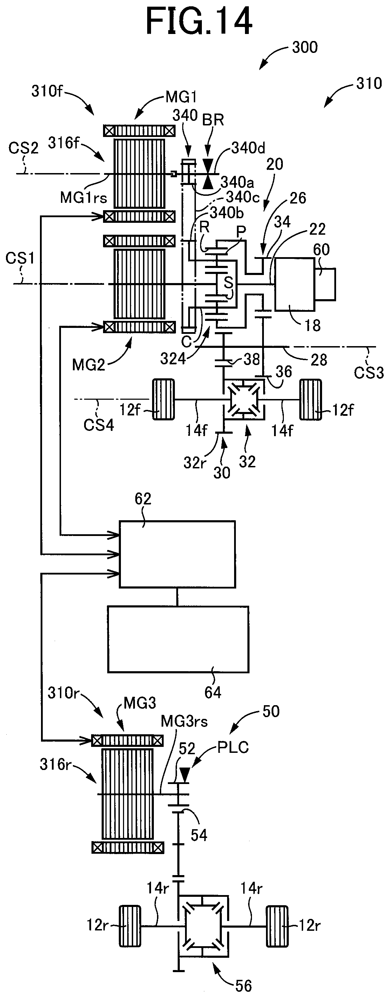

FIG 14 is a view schematically showing a construction of a vehicle 300 provided with a vehicle drive apparatus 310 (including a front drive portion 310f and a rear drive portion 310r) to which the present invention is applied. As shown in FIG 14, the vehicle drive apparatus 310 includes the drive shafts 14 for driving the drive wheels 12 and a drive unit 316 (including a front drive unit 316f and a rear drive unit 316r) for driving the drive shafts 14. The front drive unit 316f includes a differential mechanism 324, and corresponds to "first drive unit" recited in the appended claims. As in the above-described first embodiment, the differential mechanism 324 is connected to the front drive shafts 14f through the front power transmission mechanism 20, for example. The rear drive unit 316r corresponds to "second drive unit" recited in the appended claims.

The differential mechanism 324 is a planetary gear device of single pinion type, which includes a sun gear S, pinion gears P, a carrier C and a ring gear R. The sun gear S is connected to the second electric motor MG2. The carrier C is connected to the engine 18 and the first electric motor MG1. The ring gear R is connected to the front drive shafts 14f through the pair of counter gears 26 and the pair of final gears 30, for example.

As in the above-described first embodiment, the first electric motor MG1 is disposed on the second axis CS2. The front drive unit 316f further includes a power transmission mechanism 340 in place of the power transmission mechanism 40 provided in the above-described first embodiment. The first electric motor MG1 is connected to the carrier C through the power transmission mechanism 340.

The power transmission mechanism 340 includes a motor drive gear 340a, a motor driven gear 340b, a belt 340c and a motor drive shaft 340d, for example. The motor drive shaft 340d is a rotary shaft disposed on the second axis CS2, and is integrally connected to the rotor shaft MG1rs of the first electric motor MG1 by a spline engagement, so as not to be rotatable relative to the rotor shaft MG1rs of the first electric motor MG1. The motor drive gear 340a is mounted on the motor drive shaft 340d, so as not to be rotatable relative to the motor drive shaft 340d. The motor drive gear 340a is disposed on the second axis CS2, and is connected to the first electric motor MG1. The motor driven gear 340b is disposed on the first axis CS1, and is connected to the carrier C. The belt 340c is provided to connect between the motor drive gear 340a and the motor driven gear 340b, and corresponds to "connecting member" recited in the appended claims. The motor drive gear 340a has a smaller diameter and fewer teeth than the motor driven gear 340b, so that the power transmission mechanism 340 functions as a reduction mechanism, for example. In other words, the power transmission mechanism 340 is constructed such that the motor drive shaft 340d is to be rotated at a higher speed than the carrier C as the first rotary element RE1. It is noted that the power transmission mechanism 340 may be constructed such that the motor drive gear 340a and the motor driven gear 340b mesh with each other without provision of the belt 340c. Further, in each of the front drive units 16f, 116f, 216f in the above-described first through third embodiments, too, the power transmission mechanism 40 may be replaced by the power transmission mechanism 340. Alternatively, in the front drive unit 316f in this fourth embodiment, the power transmission mechanism 340 may be replaced by the power transmission mechanism 40.

The front drive unit 316f further includes the brake BR. The brake BR is disposed on the motor drive shaft 340d, and is connected at one of its opposite end portions to the motor drive shaft 340d and at the other of the opposite end portions to a non-rotatable member (not shown). That is, in the front drive unit 316f in this fourth embodiment, the motor drive shaft 340d constitutes the rotary shaft on which the brake BR is provided. The motor drive shaft 340d corresponds to "rotary shaft" recited in the appended claims. As compared with a case in which the brake BR is disposed on the first axis CS1, the size of the front drive portion 310f in the direction of the first axis CS1 can be made smaller.

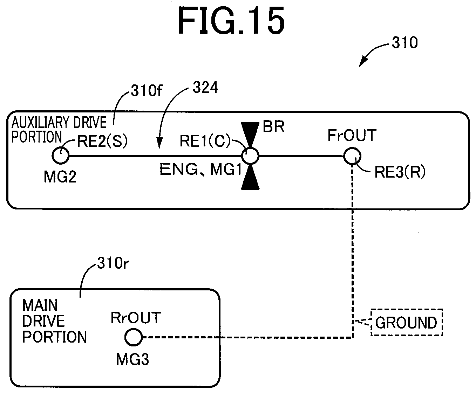

FIG 15 is a view showing a construction of the vehicle drive apparatus 310, by using a collinear diagram. As shown in FIG 15, the differential mechanism 324 of the front drive portion 310f includes three rotary elements consisting of a first rotary element RE1, a second rotary element RE2 and a third rotary element RE3. Each of the rotary elements RE1-RE3 of the differential mechanism 324 is connected to an actuator. Expressing using the collinear diagram, the first rotary element RE1 is the carrier C. The first rotary element RE1 is connected to the engine 18 and the first electric motor MG1. The second rotary element RE2 is the sun gear S. The second rotary element RE2 is connected to the second electric motor MG2. The third rotary element RE3 is the ring gear R. The third rotary element RE3 is connected to the front drive shafts 14f, i.e., the front wheels 12f,. The brake BR corresponds to "brake mechanism" recited in the appended claims, and is configured to stop rotation of the first rotary element RE1 by being placed in an engaged state. It is noted that the rear drive portion 310r is substantially the same as the rear drive portion 10r in the above-described first embodiment, so that the description is not provided.

As in the vehicle drive apparatus 10 of the above-described first embodiment, in the vehicle drive apparatus 310, the engine 18 and the first through third electric motors MG1, MG2, MG3 are controlled whereby the drive mode of the vehicle 300 can be placed into a selected one of a plurality of modes.

At the mechanical point of the differential mechanism 324, the rotational speed of the third rotary element RE3, which is the output element, is set to an acceleration side, i.e., to overdrive (O/D) side, relative to the engine rotational speed Ne. In other words, the mechanical point of the differential mechanism 324 is set by a speed increase ratio. Therefore, in the vehicle drive apparatus 310, Mode 3 is the O/D input split mode, and Mode 4 is the O/D output split mode.

As described above, as in the above-described first embodiment, in the present fourth embodiment, the axial dimension of the front drive unit 316f can be made small in the vehicle drive apparatus 310 that is capable of establishing the BEV mode for driving the vehicle 300 by the second electric motor MG2.

In the present fourth embodiment, the power transmission mechanism 340 is constructed such that the rotary shaft, on which the brake BR is disposed, is to be rotated at a higher speed than the first rotary element RE1. Thus, it is possible to reduce the torque inputted to the brake BR from the differential mechanism 324 and accordingly to reduce the required strength of the brake BR.

In the present fourth embodiment, the power transmission mechanism 340 includes the motor drive gear 340a and the motor driven gear 340b, such that the motor drive gear 340a and the motor driven gear 340b mesh with each other, or are connected to each other through the belt 340c that is also included in the power transmission mechanism 340. Thus, by providing the brake BR on the motor drive shaft 340d on which the motor drive gear 340a is mounted, it is possible to reduce the axial dimension of the front drive unit 316f.

### FIFTH EMBODIMENT

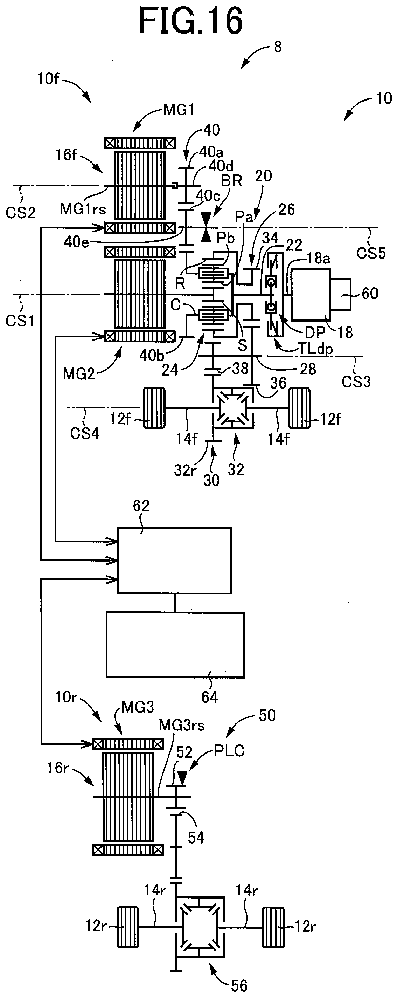

FIG 16 is a view for explaining that the vehicle drive apparatus 10 of the above-described first embodiment is equipped with a damper mechanism DP. As shown in FIG 16, the front drive unit 16f includes the damper mechanism DP provided in the power transmission path between a crankshaft 18a of the engine 18 and the input shaft 22. The damper mechanism DP is, for example, a known damper configured to absorb torque fluctuations of the engine 18. The front drive unit 16f includes a damper-portion torque limiter TLdp provided in the power transmission path between the crankshaft 18a and the damper mechanism DP. The damper-portion torque limiter TLdp is a known torque limiter configured to limit the torque transmitted between the input shaft 22 (synonymous with the crankshaft 18a) and the front drive shafts 14f, i.e., the front wheels 12f. The damper-portion torque limiter TLdp is a torque limiting mechanism configured to prevent torque transmission from exceeding a limit torque Tlim as a predetermined torque, namely, limit the torque transmission larger than the limit torque Tlim. When the inputted torque exceeds the limit torque Tlim, for example, the damper-portion torque limiter TLdp causes slippage for preventing the torque transmission exceeding the limit torque Tlim. For example, even when a front-drive-shaft input torque Tfds is an excessive torque exceeding the limit torque Tlim, an input-shaft input torque Tin is reduced to below the limit torque Tlim by the damper-portion torque limiter TLdp. The front-drive-shaft input torque Tfds is the torque inputted to the front drive shafts 14f, while the input-shaft input torque Tin is the torque inputted to the input shaft 22. The excessive torque of the front-drive-shaft input torque Tfds is the torque inputted from the front wheels 12f, which occurs when the front wheels 12f repeatedly slips and grips on an uneven road, for example.

By the way, the front drive unit 16f includes the brake BR. When the brake BR is in the engaged state, the input shaft 22 is fixed so as to be unrotatable, so that the torque limiter function of the damper-portion torque limiter TLdp does not work. Therefore, if the front-drive-shaft input torque Tfds is increased excessively with the brake BR being in the engaged state, there is a risk that an excessively large input load could be applied to the brake BR and rotary members such as gears and shafts in the power transmission path between the input shaft 22 and the front wheels 12f.

Therefore, the front drive unit 16f further includes a torque limiter TL configured to limit the torque transmitted between the brake BR and the front drive shafts 14f. The torque limiter TL is disposed in the power transmission path between the brake BR and the front drive shafts 14f, for example. Like the damper-portion torque limiter TLdp, the torque limiter TL has function of preventing the torque transmission that exceeds the limit torque Tlim. Where the one-way clutch OWC is provided in place of the brake BR, too, the front drive unit 16f further includes the torque limiter TL provided in the power transmission path between the one-way clutch OWC and the front drive shafts 14f, for example. The same applies to each of the front drive units 116f, 216f, 316f in the above-described second through fourth embodiments.

The function of the torque limiter TL may be provided in the brake mechanism (such as the brake BR and the one-way clutch OWC). For example, the brake mechanism is constituted by an engagement mechanism that has function of limiting the torque transmitted between the brake mechanism and the front drive shafts 14f.

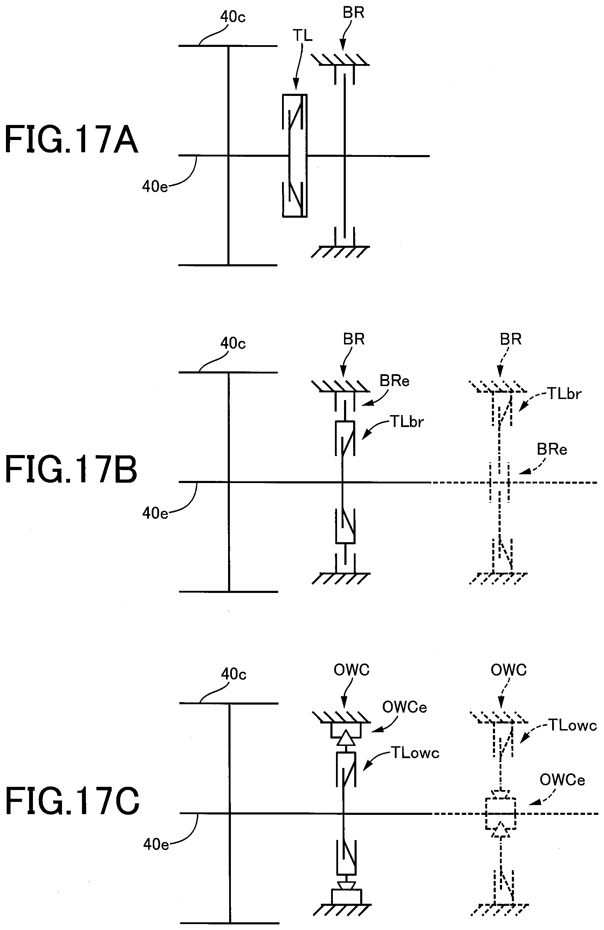

FIGS. 17A through 17C are views for explaining examples of the torque limiter TL configured to limit the torque transmitted between the brake mechanism and the front drive shafts 14f. FIG 17A shows an example in which the torque limiter TL is provided in the power transmission path between the brake BR and the front drive shafts 14f. As shown in FIG 17A, the torque limiter TL is provided in the power transmission path between the brake BR and the idler gear 40c mounted on the idler shaft 40e on which the brake BR is provided.

FIG 17B shows an example in which function equivalent to the torque limiter TL is provided in the brake BR. As shown in FIG 17B, the brake BR includes a brake-portion torque limiter TLbr and a brake element BRe, such that the brake-portion torque limiter TLbr is provided in an end portion of the brake BR which is connected to the idler shaft 40e, and the brake element BRe is provided in another end portion of the brake BR which is connected to the non-rotatable member. The brake BR is an engagement mechanism including the brake-portion torque limiter TLbr and the brake element BRe. The brake-portion torque limiter TLbr has function equivalent to the torque limiter TL. The brake element BRe has function equivalent to the brake BR shown in FIG 17A. It is noted that the brake element BRe may be provided in the end portion of the brake BR which is connected to the idler shaft 40e and the brake-portion torque limiter TLbr may be provided in the other end portion of the brake BR which is connected to the non-rotatable member (see the brake BR indicated by dashed line in FIG 17B).

FIG 17C shows an example in which function equivalent to the torque limiter TL is provided in the one-way clutch OWC. As shown in FIG 17C, the one-way clutch OWC includes a one-way-portion torque limiter TLowc and a one-way element OWCe, such that the one-way-portion torque limiter TLowc is provided in an end portion of the one-way clutch OWC which is connected to the idler shaft 40e, and the one-way element OWCe is provided in another end portion of the one-way clutch OWC which is connected to the non-rotatable member. The one-way clutch OWC is an engagement mechanism including the one-way-portion torque limiter TLowc and the one-way element OWCe. The one-way-portion torque limiter TLowc has function equivalent to the torque limiter TL. The one-way element OWCe has function equivalent to the one-way clutch OWC shown in FIG 11. It is noted that the one-way element OWCe may be provided in the end portion of the one-way clutch OWC which is connected to the idler shaft 40e and the one-way-portion torque limiter TLowc may be provided in the other end portion of the one-way clutch OWC which is connected to the non-rotatable member (see the one-way clutch OWC indicated by dashed line in FIG 17C).

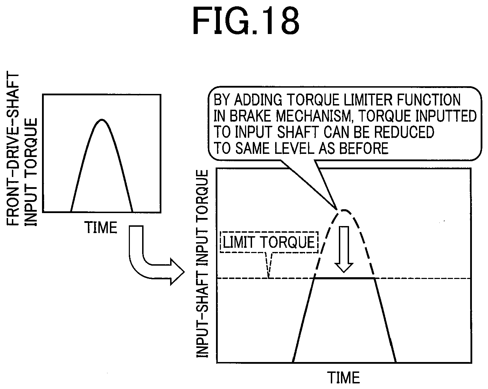

FIG 18 is a view showing, by way of example, effect where the function of the torque limiter TL is provided in the power transmission path between the brake mechanism and the front drive shafts 14f. As shown in FIG 18, even when the front-drive-shaft input torque Tfds is an excessive torque exceeding the limit torque Tlim, the input-shaft input torque Tin is reduced to below the limit torque Tlim by the torque limiter TL.

As described above, in the present fifth embodiment, the same effects as those of the above-described first embodiment can be obtained.

In the present fifth embodiment, the front drive unit 16f further includes the torque limiter TL configured to limit the torque transmitted between the brake BR and the front drive shafts 14f. The brake BR is constituted by an engagement mechanism configured to limit the torque transmitted between the brake BR and the front drive shafts 14f. Thus, even when an excessively large torque is inputted from the front drive shafts 14f with the brake BR being in the engaged state, it is possible to prevent an excessively large load from being applied to the brake BR and also to rotary members in the power transmission path between the brake BR and the front drive shafts 14f.

### SIXTH EMBODIMENT

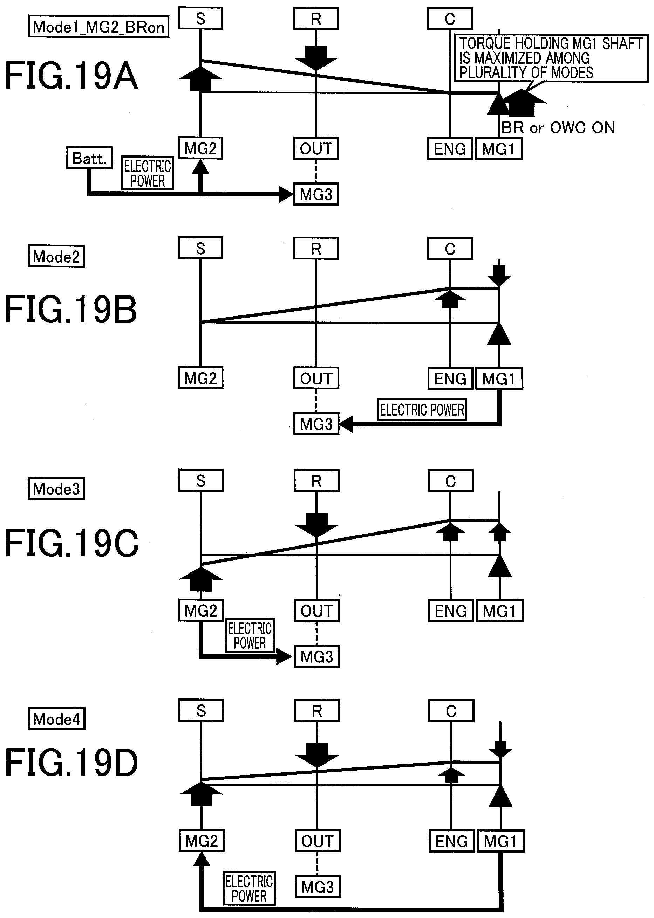

FIGS. 19A-19D are views for explaining magnitude of the torque generated in the power transmission path between the engine shaft and the first electric motor shaft in each of a plurality of switchable drive modes in the vehicle drive apparatus 10 of the above-described first embodiment, in a case in which the differential mechanism 24 is used on under drive (U/D) side. The engine shaft is the input shaft 22 to which the engine 18 is connected. The first electric motor shaft is the motor drive shaft 40d to which the first electric motor MG1 is connected. The power transmission path between the engine shaft and the first electric motor shaft is the power transmission path through the power transmission mechanism 40. FIG 19A shows an example in the Mode1_MG2_BRon (synonymous with the engaged state of the one-way clutch OWC). FIG 19B shows an example in the Mode2. FIG 19C shows an example in the Mode 3. FIG 19D shows an example in the Mode4.

When the BEV driving is performed by only operation of the front drive portion 10f as in the Mode1_MG2_BR shown in FIG 19A, the reaction force of the second electric motor torque Tmg2 needs to be held by only the first electric motor shaft. Therefore, in the Mode1_MG2_BR, the torque generated in the power transmission path between the engine shaft and the first electric motor shaft is the largest among in the plurality of modes shown in FIGS. 19A-19D.

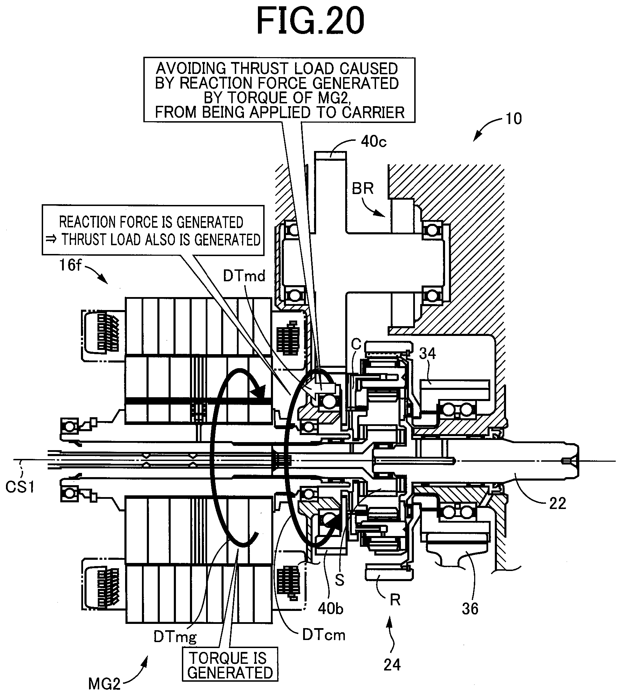

FIG 20 is a view for explaining setting of a helix angle of the motor driven gear 40b in the vehicle drive apparatus 10 of the above-described first embodiment, wherein the motor driven gear 40b is a helical gear.

In the front drive unit 16f, when the torque is applied from the second electric motor MG2 to the differential mechanism 24, the reaction force is generated in the motor driven gear 40b connected to the first electric motor shaft. As a result of the reaction force being generated in the motor driven gear 40b, a thrust load is also generated in the motor driven gear 40b. The thrust load is synonymous with a thrust force. In the Mode1_MG2_BR, the thrust load generated in the motor driven gear 40b by receiving the torque from the second electric motor MG2, is the largest among in the plurality of modes. If such a large thrust load is applied from the motor driven gear 40b to the differential mechanism 24, it would be necessary to increase the required strength of the differential mechanism 24.

Therefore, in the front drive unit 16f, in order to reduce a maximum load applied from the motor driven gear 40b to the differential mechanism 24, the thrust load applied from the motor driven gear 40b, which is generated by receiving the torque from second electric motor MG2, is avoided from being applied to the carrier C of the differential mechanism 24.

To this end, the helix angle of the motor driven gear 40b is set to an angle by which the direction of the thrust load generated in motor driven gear 40b by the torque generated by the second electric motor MG2 in the Mode1_MG2_BR is made opposite to a direction toward the carrier C as the first rotary element RE1. In other words, the helix angle of the motor driven gear 40b is set such that the direction of the thrust load generated in the motor driven gear 40b by the torque generated by the second electric motor MG2 in the Mode1_MG2_BR is the opposite direction to the direction toward the carrier C. The torque generated by the second electric motor MG2 in the Mode1_MG2_BR means that the second electric motor MG2 generates the torque by which the vehicle 8 is moved in the forward direction with the rotation of the carrier C as the first rotary element RE1 being stopped by the brake BR. The brake BR may be replaced by the one-way clutch OWC.

In FIG 20, black arrow DTmg indicates the torque generated by the second electric motor MG2, black arrow DTcm indicates the reaction force torque generated in the motor driven gear 40b, and white arrow DTmd indicates the direction of the thrust load generated in the motor driven gear 40b. In the front drive unit 16f, the helix angle of the motor driven gear 40b is set such that the thrust load is generated in the direction indicated by the white arrow DTmd.

As described above, in the present sixth embodiment, the motor driven gear 40b is the helical gear having the helix angle that is set such that the direction of the thrust load generated in the motor driven gear 40b owing to the torque, which is generated by the second electric motor MG2 to cause the vehicle to run in the forward direction with the rotation of the first rotary element RE1 being stopped, is opposite to the direction toward the first rotary element RE1. Thus, a maximum value of the load inputted to the differential mechanism 24 from the motor driven gear 40b is reduced so that it is possible to reduce the required strength of the differential mechanism 24, in addition to obtaining substantially the same effects as in the above-described first embodiment.

### SEVENTH EMBODIMENT

In the above-described sixth embodiment, the setting of the helix angle of the motor driven gear 40b has been described by taking the differential mechanism 24 used on the U/D side as an example. The setting of the helix angle of the motor driven gear 40b described in the above-described sixth embodiment can also be applied to the planetary gear device of double pinion type used on the O/D side, such as the differential mechanism 124 in the above-described second embodiment. Further, the setting of the helix angle of the motor driven gear 40b described in the above-described sixth embodiment can be applied also to the planetary gear device of single pinion type, such as the differential mechanism 224 in the above-described third embodiment and the differential mechanism 324 in the above-described fourth embodiment.

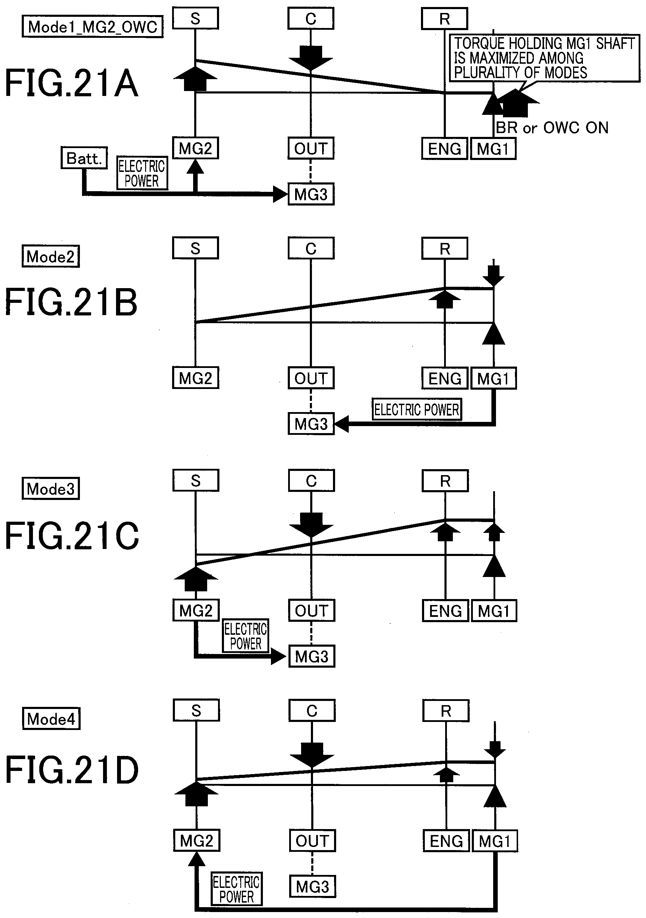

FIGS. 21A-21D are views for explaining magnitude of the torque generated in the power transmission path between the engine shaft and the first electric motor shaft in each of a plurality of switchable drive modes in the vehicle drive apparatus 210 of the above-described third embodiment, in a case in which the differential mechanism 224 is used on under drive (U/D) side. FIG 21A shows an example in the Mode1_MG2_OWC (synonymous with the engaged state of the brake BR). FIG 21B shows an example in the Mode2. FIG 21C shows an example in the Mode 3. FIG 21D shows an example in the Mode4.

When the BEV driving is performed by only operation of the front drive portion 210f as in the Mode1_MG2_OWC shown in FIG 21A, the reaction force of the second electric motor torque Tmg2 needs to be held by only the first electric motor shaft. Therefore, in the Mode1_MG2_OWC, the torque generated in the power transmission path between the engine shaft and the first electric motor shaft is the largest among in the plurality of modes shown in FIGS. 21A-21D. Thus, the setting of the helix angle of the motor driven gear 40b described in the above-described sixth embodiment is useful also in the case of the planetary gear device of single pinion type.

### EIGHTH EMBODIMENT

In the above-described sixth embodiment, the setting of the helix angle of the motor driven gear 40b has been described by taking the power transmission path through the power transmission mechanism 40 as an example of the power transmission path from the engine shaft to the first electric motor shaft. The setting of the helix angle of the motor driven gear 40b described in the above-described sixth embodiment can also be applied to the helix angle of the motor driven gear 340b in the power transmission path through the power transmission mechanism 340. The first electric motor shaft in the power transmission path through the power transmission mechanism 340 is the motor drive shaft 340d to which the first electric motor MG1 is connected.

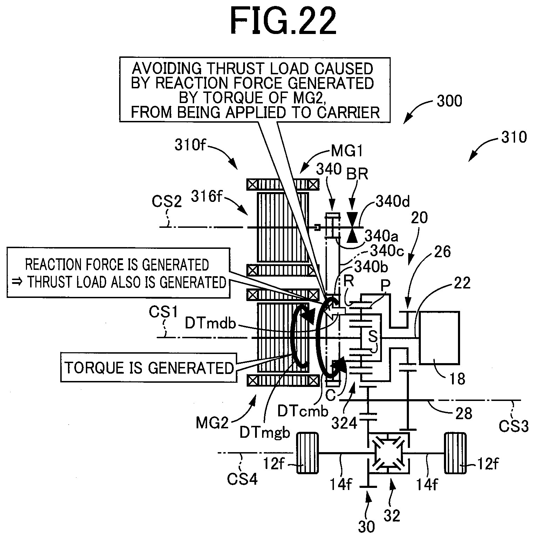

FIG 22 is a view for explaining setting of the helix angle of the motor driven gear 340b in the vehicle drive apparatus 310 in the above-described fourth embodiment, wherein the motor driven gear 340b is a helical gear. It is noted that the power transmission mechanism 340 may be constructed such that the motor drive gear 340a and the motor driven gear 340b mesh with each other without provision of the belt 340c, as in the above-described fourth embodiment.

In the front drive unit 316f, when the torque is applied from the second electric motor MG2 to the differential mechanism 324 (see black arrow DTmgb), the reaction force is generated in the motor driven gear 340b connected to the first electric motor shaft (see black arrow DTcmb). As a result of the reaction force being generated in the motor driven gear 340b, a thrust load is also generated in the motor driven gear 340b. In the Mode1_MG2_BR, the thrust load generated in the motor driven gear 340b is the largest among in the plurality of modes. In the front drive unit 316f, in order to reduce a maximum load applied from the motor driven gear 340b to the differential mechanism 324, the thrust load applied from the motor driven gear 340b, which is generated by receiving the torque from second electric motor MG2, is avoided from being applied to the carrier C of the differential mechanism 324 (see white arrow DTmdb).

To this end, the helix angle of the motor driven gear 340b is set to an angle by which the direction of the thrust load generated in motor driven gear 340b by the torque generated by the second electric motor MG2 in the Mode1_MG2_BR is made opposite to a direction toward the carrier C as the first rotary element RE1. In other words, the helix angle of the motor driven gear 340b is set such that the direction of the thrust load generated in the motor driven gear 340b by the torque generated by the second electric motor MG2 in the Mode1_MG2_BR is the opposite direction to the direction toward the carrier C. The torque generated by the second electric motor MG2 in the Mode1_MG2_BR means that the second electric motor MG2 generates the torque by which the vehicle 8 is moved in the forward direction with the rotation of the carrier C as the first rotary element RE1 being stopped by the brake BR. The brake BR may be replaced by the one-way clutch OWC. In the front drive unit 316f, the helix angle of the motor driven gear 340b is set such that the thrust load is generated in the direction indicated by the white arrow DTmdb.

As described above, in the present eighth embodiment, the motor driven gear 340b is the helical gear having the helix angle that is set such that the direction of the thrust load generated in the motor driven gear 340b owing to the torque, which is generated by the second electric motor MG2 to cause the vehicle to run in the forward direction with the rotation of the first rotary element RE1 being stopped, is opposite to the direction toward the first rotary element RE1. Thus, a maximum value of the load inputted to the differential mechanism 324 from the motor driven gear 340b is reduced so that it is possible to reduce the required strength of the differential mechanism 324, in addition to obtaining substantially the same effects as in the above-described fourth embodiment.

### NINTH EMBODIMENT

In the above-described first through fifth embodiments, the parking mechanism PLC is provided in each of the rear drive units 16r, 116r, 216r, 316r. However, the parking mechanism PLC may be provided in each of the front drive units 16f, 116f, 216f, 316f in place of each of the rear drive units 16r, 116r, 216r, 316r.

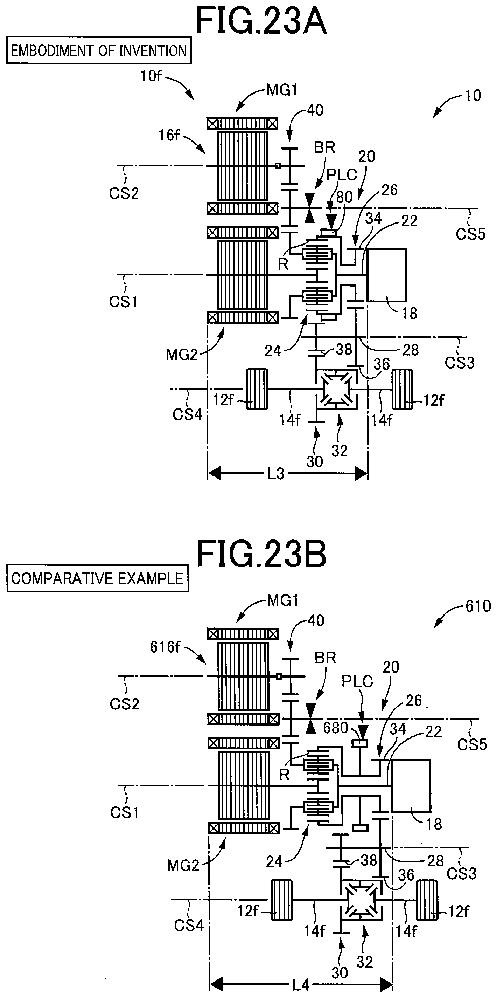

FIGS. 23A and 23B are views for explaining examples of the front drive unit provided with the parking mechanism PLC, wherein FIG 23A shows a position of the parking mechanism PLC in this ninth embodiment, and FIG 23B shows a position of the parking mechanism PLC in a comparative example.

As shown in FIG 23B, the parking mechanism PLC is provided in a front drive unit 616f of a vehicle drive apparatus 610 of the comparative example. The parking mechanism PLC has an end portion connected to a non-rotatable member (not shown) and another end portion that is to be engaged with or disengaged from a parking gear 680 that is included in the front drive unit 616f. The parking mechanism PLC is configured to switch between a parking lock state in which the parking gear 680 is mechanically fixed so as to be unrotatable and a non-parking lock state in which the parking gear 680 is rotatable. The parking gear 680 is a member which is to be rotated together with the third rotary element RE3 (ring gear R) of the differential mechanism 24, and which is configured to inhibit the front drive shafts 14f from being rotated by being mechanically fixed so as to be unrotatable. The parking gear 680 is arranged in line between the differential mechanism 24 and the counter drive gear 34 on the first axis CS1. Therefore, the axial dimension of the front drive unit 616f is made large (see "L4" in FIG 23B).

As shown in FIG 23A, the parking mechanism PLC is provided in the front drive unit 16f of the vehicle drive apparatus 10. The parking mechanism PLC has an end portion connected to a non-rotatable member (not shown) and another end portion that is to be engaged with or disengaged from a parking gear 80 that is included in the front drive unit 16f. The parking mechanism PLC is configured to switch between a parking lock state in which the parking gear 80 is mechanically fixed so as to be unrotatable and a non-parking lock state in which the parking gear 80 is rotatable. The parking gear 80 is a member which is to be rotated together with the third rotary element RE3 (ring gear R) of the differential mechanism 24, and which is configured to inhibit the front drive shafts 14f from being rotated by being mechanically fixed so as to be unrotatable. The parking gear 80 is located on the first axis CS1 in a position that overlaps with the third rotary element RE3 of the differential mechanism 24 in a radial direction. Thus, the parking gear 80 and the ring gear R are located in respective positions that overlap with each other in the radial direction. As a result, the size of the front drive unit 16f in the direction of the first axis CS1 can be made smaller than that of the front drive unit 616f in the comparative example (see "L3" in FIG 23A, where "L3" is smaller than "L4" shown in FIG 23B). In other words, the axial dimension of the front drive unit 16f can be made smaller.

As described above, in the present ninth embodiment, the parking gear 80 provided in the front drive unit 16f is located in the position that overlaps with the third rotary element RE3 in the radial direction. Thus, the axial dimension of the front drive unit 16f can be reduced. As in the front drive unit 16f, in each of the front drive units 116f, 216f, 316f, the parking gear is provided, so that substantially the same effect can be obtained.

While the preferred embodiments of this invention have been described in detail by reference to the drawings, it is to be understood that the invention may be otherwise embodied.

For example, the rear drive portion (10r; 110r; 210r; 310r) may be omitted in the above-described first through ninth embodiments. Even without the rear drive portion (10r; 110r; 210r; 310r), it is possible to carry out the present invention in which the brake mechanism is provided on the rotary shaft that is rotatable about the rotary axis other than the first axis CS1. Further, it is possible to establish various modes such as the above-described "Mode1_MG2", "Mode1_MG2_BRon", "Mode4" and "Mode1_MG2_OWC", as the drive mode of the vehicle.

In the differential mechanism 24 in the above-described first, fifth, sixth and ninth embodiments, the first rotary element RE1 may be any one of the carrier C and the sun gear S, while the second rotary element RE2 may be the other of the carrier C and the sun gear S. Where the first rotary element RE1 is the sun gear S while the second rotary element RE2 is the carrier C, the engine 18 and the first electric motor MG1 are connected to the sun gear S while the second electric motor MG2 is connected to the carrier C.

In the differential mechanism 124 in the above-described second embodiment, the second rotary element RE2 may be any one of the sun gear S and the carrier C, while the third rotary element RE3 may be the other of the sun gear S and the carrier C. Where the second rotary element RE2 is the carrier C while the third rotary element RE3 is the sun gear S, the second electric motor MG2 is connected to the carrier C while the front drive shafts 14f are connected to the sun gear S.

In the differential mechanism 224 in the above-described third and seventh embodiments, the first rotary element RE1 may be any one of the ring gear R and the sun gear S, while the second rotary element RE2 may be is the other of the ring gear R and the sun gear S. Where the first rotary element RE1 is the sun gear S while the second rotary element RE2 is the ring gear R, the engine 18 and the first electric motor MG1 are connected to the sun gear S while the second electric motor MG2 is connected to the ring gear R.

In the differential mechanism 324 in the above-described fourth and eighth embodiments, the second rotary element RE2 may be any one of the sun gear S and the ring gear R, while the third rotary element RE3 may be the other of the sun gear S and the ring gear R. Where the second rotary element RE2 is the ring gear R while the third rotary element RE3 is the sun gear S, the second electric motor MG2 is connected to the ring gear R while the front drive shafts 14f are connected to the sun gear S.

As shown in the above-described first through ninth embodiments, the second rotary element RE2 is a rotary element located in one of opposite ends in the collinear diagram in which the three rotary elements of the differential mechanism are arranged in a straight line.

In the above-described first through ninth embodiments, one of the front and rear wheels 12f, 12r, to which the powers of the engine 18 and the second electric motor MG2 are to be transmitted, may be the rear wheel 12r in place of the front wheel 12f, while the other of the front and rear wheels 12f, 12r, to which the power of the third electric motor MG3 is to be transmitted, may be the front wheel 12f in place of the rear wheel 12r. In other words, the first drive shaft may be each of the rear drive shafts 14r while the second drive shaft may be each of the front drive shafts 14f.

In the above-described first through ninth embodiments, the drive portion including the third electric motor MG3 is the main drive portion in the PHEV in which it is expected that the BEV driving in the Mode1_MG3 will be used frequently. However, the drive portion including the engine 18 and the second electric motor MG2 may be the main drive portion in the HEV.

In the above-described first through ninth embodiments, the front power transmission mechanism 20 may further include a clutch mechanism that is configured to cut off the power transmission between the third rotary element RE3 and the front drive shafts 14f, by being placed in its released state. The clutch mechanism is controlled to be placed in the released state when the vehicle is caused to run, for example, in the Mode1_MG3, i.e., the BEV mode in which the third electric motor MG3 is caused to generate the torque. Thus, it is possible to prevent power loss caused by dragging of the second electric motor MG2 or other components located on an upstream side of the front drive shafts 14f, during the BEV driving in which the vehicle is caused to run by using the third electric motor MG3 as the power source.

In the above-described first through ninth embodiments, the rear power transmission mechanism 50 may further include a clutch mechanism that is configured to cut off the power transmission between the third electric motor MG3 and the rear drive shafts 14r, by being placed in its released state. The clutch mechanism is controlled to be placed in the released state when the vehicle is caused to run, for example, in the Mode1_MG2 or Mode1_MG2_BRon, i.e., the BEV mode in which the second electric motor MG2 is caused to generate the torque. Thus, it is possible to prevent power loss caused by dragging of the third electric motor MG3 during the BEV driving in which the vehicle is caused to run by using the second electric motor MG2 as the power source.

It is to be understood that the embodiments described above are given for illustrative purpose only, and that the present invention may be embodied with various modifications and improvements which may occur to those skilled in the art.

### NOMENCLATURE OF ELEMENTS

8: vehicle
10: vehicle drive apparatus
12f: front wheel
12r: rear wheel
14f: front drive shaft (first drive shaft)
14r: rear drive shaft (second drive shaft)
16f: front drive unit (first drive unit)
16r: rear drive unit (second drive unit)
18: engine
24: differential mechanism (planetary gear device)
S: sun gear (second rotary element)
C: carrier (first rotary element)
R: ring gear (third rotary element)
40: power transmission mechanism
40a: motor drive gear
40b: motor driven gear
40c: idler gear
40d: motor drive shaft (rotary shaft)
40e: idler shaft (rotary shaft)
80: parking gear
100: vehicle
110: vehicle drive apparatus
116f: front drive unit (first drive unit)
116r: rear drive unit (second drive unit)
124: differential mechanism (planetary gear device)
S: sun gear (second rotary element)
C: carrier (third rotary element)
R: ring gear (first rotary element)
200: vehicle
210: vehicle drive apparatus
216f: front drive unit (first drive unit)
216r: rear drive unit (second drive unit)
224: differential mechanism (planetary gear device)
S: sun gear (second rotary element)
C: carrier (third rotary element)
R: ring gear (first rotary element)
300: vehicle
310: vehicle drive apparatus
316f: front drive unit (first drive unit)
316r: rear drive unit (second drive unit)
324: differential mechanism (planetary gear device)
S: sun gear (second rotary element)
C: carrier (first rotary element)
R: ring gear (third rotary element)
340: power transmission mechanism
340a: motor drive gear
340b: motor driven gear
340c: belt (connecting member)
340d: motor drive shaft (rotary shaft)
BR: brake (brake mechanism)
CS1: first axis
CS2: second axis
CS5: fifth axis (rotary axis other than first axis)
MG1: first electric motor
MG2: second electric motor
MG3: third electric motor
OWC: one-way clutch (brake mechanism)
RE1: first rotary element
RE2: second rotary element
RE3: third rotary element
TL: torque limiter
TLbr: brake-portion torque limiter (torque limiter)
TLowc: one-way-portion torque limiter (torque limiter)

## Claims

1. A drive apparatus (10;110;210;310) for a vehicle (8;100;200;300), the drive apparatus (10;110;210;310) comprising:
an engine (18);
a first drive shaft (14f) for driving one of front and rear wheels (12f, 12r) of the vehicle (8;100;200;300); and
a first drive unit (16f; 116f;216f;316f) including (i) a first electric motor (MG1), (ii) a second electric motor (MG2), (iii) a planetary gear device (24;124;224;324) having a first rotary element (RE1), a second rotary element (RE2) and a third rotary element (RE3) that are rotatable about a first axis (CS1), (iv) a power transmission mechanism (40; 340) and (v) a brake mechanism (BR;OWC) configured to stop rotation of the first rotary element (RE1) by being placed in an engaged state,
wherein the engine (18) and the first electric motor (MG1) are connected to the first rotary element (RE1),
wherein the second electric motor (MG2) is disposed on the first axis (CS1) and is connected to the second rotary element (RE2),
wherein the first drive shaft (14f) is connected to the third rotary element (RE3),
wherein the first electric motor (MG1) is disposed on a second axis (CS2) that is other than the first axis (CS1), and is connected to the first rotary element (RE1) through the power transmission mechanism (40; 340), and
wherein the brake mechanism (BR;OWC) is provided on a rotary shaft (40d;40e;340d) which is rotatable about a rotary axis (CS5) other than the first axis (CS1) and which constitutes a part of the power transmission mechanism (40;340).

2. The drive apparatus (10; 110;210;310) according to claim 1,
wherein the power transmission mechanism (40; 340) is constructed such that the rotary shaft (40d;40e;340d), on which the brake mechanism (BR;OWC) is disposed, is to be rotated at a higher speed than the first rotary element (RE1).

3. The drive apparatus (10;110;210) according to claim 1,
wherein the power transmission mechanism (40) includes (iv-1) a motor drive gear (40a) which is disposed on the second axis (CS2) and which is connected to the first electric motor (MG1), (iv-2) a motor driven gear (40b) which is disposed on the first axis (CS1) and which is connected to the first rotary element (RE1) and (iv-3) an idler gear (40c) which is disposed on the rotary axis (CS5) other than the first and second axes (CS1, CS2) and which meshes with the motor drive gear (40a) and the motor driven gear (40b), and
wherein one of the motor drive gear (40a) and the idler gear (40c) is mounted on the rotary shaft (40d;40e), unrotatably relative to the rotary shaft (40d;40e).

4. The drive apparatus (10;110;210) according to claim 3,
wherein the one of the motor drive gear (40a) and the idler gear (40c), which is mounted on the rotary shaft (40d;40e), has a fewer number of teeth than the other of the motor drive gear (40a) and the idler gear (40c).

5. The drive apparatus (10;110;210) according to claim 3,
wherein the motor driven gear (40b) is a helical gear having helix angle that is set such that a direction of a thrust load generated in the motor driven gear (40b) owing to a torque, which is generated by the second electric motor (MG2) to cause the vehicle (8;100;200) to run in a forward direction with the rotation of the first rotary element (RE1) being stopped by the brake mechanism (BR;OWC), is opposite to a direction toward the first rotary element (RE1).

6. The drive apparatus (310) according to claim 1,
wherein the power transmission mechanism (340) includes (iv-1) a motor drive gear (340a) which is disposed on the second axis (CS2) and which is connected to the first electric motor (MG1) and (iv-2) a motor driven gear (340b) which is disposed on the first axis (CS1) and which is connected to the first rotary element (RE1), such that the motor drive gear (340a) and the motor driven gear (340b) mesh with each other, or are connected to each other through a connecting member (340c), and
wherein the motor drive gear (340a) is mounted on the rotary shaft (340d), unrotatably relative to the rotary shaft (340d).

7. The drive apparatus (310) according to claim 6,
wherein the motor driven gear (340b) is a helical gear having helix angle that is set such that a direction of a thrust load generated in the motor driven gear (340b) owing to a torque, which is generated by the second electric motor (MG2) to cause the vehicle (300) to run in a forward direction with the rotation of the first rotary element (RE1) being stopped by the brake mechanism (BR;OWC), is opposite to a direction toward the first rotary element (RE1).

8. The drive apparatus (10;110;210;310) according to claim 1,
wherein the first drive unit (16f) further includes a torque limiter (TL) configured to limit a torque transmitted between the first drive shaft (14f) and the brake mechanism (BR;OWC).

9. The drive apparatus (10; 110;210;310) according to claim 1,
wherein the brake mechanism (BR;OWC) is constituted by an engagement mechanism configured to limit a torque transmitted between the first drive shaft (14f) and the brake mechanism (BR;OWC).

10. The drive apparatus (10;110;210;310) according to claim 1,
wherein the first drive unit (16f) further includes a parking gear (80) which is to be rotated together with the third rotary element (RE3) and which is configured to inhibit the rotation of the first drive shaft (14f) by being mechanically and unrotatably fixed, and
wherein the parking gear (80) is located in a position that overlaps with the third rotary element (RE3) in a radial direction.

11. The drive apparatus (10;110;210;310) according to any one of claims 1-10, further comprising:
a second drive shaft (14r) for driving the other of the front and rear wheels (12f,12r); and
a second drive unit (16r;316r) including a third electric motor (MG3) connected to the second drive shaft (14r).
